(19) Europäisches Patentamt
European Patent Office
Office européen des brevets

(11) Publication number: **0 454 079 A2**

(12) # EUROPEAN PATENT APPLICATION

(21) Application number: **91106576.1**

(51) Int. Cl.[5]: **G11B 11/10**

(22) Date of filing: **24.04.91**

(30) Priority: **24.04.90 JP 108282/90**
**24.04.90 JP 108283/90**
**24.04.90 JP 108284/90**

(43) Date of publication of application:
**30.10.91 Bulletin 91/44**

(84) Designated Contracting States:
**AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **Shindo, Kiyotaka, c/o Mitsui Petrochemical**
**Industries, Ltd., 580-32, Aza-Taku 2-gou, Nagaura**
**Sodegaura-shi, Chiba 299-02(JP)**
Inventor: **Okubo, Atsushi, c/o Mitsui Petrochemical**
**Industries, Ltd., 580-32, Aza-Taku 2-gou, Nagaura**
**Sodegaura-shi, Chiba 299-02(JP)**
Inventor: **Mizumoto, Kunihiko, c/o Mitsui Petrochemical**
**Industries, Ltd., 580-32, Aza-Taku 2-gou, Nagaura**
**Sodegaura-shi, Chiba 299-02(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

(54) **Magnetooptical recording media.**

(57) The magnetooptical recording media according to the present invention comprise a substrate, a protective film, a magnetooptical recording film, an aluminum alloy film and a nickel alloy film. Such magnetooptical recording media have excellent mechanical characteristics such as little warpage formation, little dependence of recording power on linear velocity, a broad margin of recording power excellent erase-read-write cyclability, and excellent oxidation resistance and recording sensitivity.

EP 0 454 079 A2

## FIELD OF THE INVENTION

The present invention relates to magnetooptical recording media having specific metallic films, and more particularly to magnetooptical recording media having little dependence of recording power on linear velocity, excellent mechanical characteristics such as little warpage (tilt) formation, excellent recording sensitivity, a broad recording power margin and excellent erase-read-write cyclability.

## BACKGROUND OF THE INVENTION

It is well known that magnetooptical recording films composed of alloys comprising transition metals, such as iron and cobalt, and rare earth elements, such as terbium (Tb) and gadolinium (Gd), have a magnetic easy axis perpendicular to the film and are capable of forming a small reversed magnetic domain with magnetization anti-parallel to the magnetization of the film. By corresponding to the existence or nonexistence of this reversed magnetic domain to "1" or "0", it becomes possible to record a digital signal in such magnetooptical recording film as mentioned above.

As the magnetooptical recording films of this kind composed of transition metals and rare earth elements, there are disclosed Tb-Fe magnetooptical recording films containing 15-30 atom% of Tb, for example, in Japanese Patent Publication No. 20691/1982. There are used also magnetooptical recording films of Tb-Fe system to which a third metal component has been added. Also known are magnetooptical recording films of Tb-Co or Tb-Fe-Co system.

Various attempts have been made to improve oxidation resistance of such magnetooptical recording films of Tb-Fe, Tb-Co or the like systems by incorporation into these films of a third metal component.

Magnetooptical recording media having a substrate and thereon such magnetooptical recording films as mentioned above have been required to have such excellent mechanical properties as little warpage formation.

Magnetooptical recording media having a substrate and thereon such magnetooptical recording films as mentioned above are generally lacking in oxidation resistance, and they have been required also to have improved recording sensitivity (C/N ratio).

Furthermore, in writing information in such magnetooptical recording media as mentioned above, it is desired that the recording power margin is broad and that dependence of the recording power on linear velocity is little. As used herein, the expression that recording power margin is broad at the time of writing information signifies that at the time of writing information in the magnetooptical recording media by using a laser beam, etc., the information can be written accurately in the magnetooptical recording media even when a power of the laser beam used as a writing optical beam varies to some extent. The expression that dependence of recording power on linear velocity is little signifies that at the time of writing information in the media by using a laser beam, etc., variation in the optimum recording power of the laser beam is small between the inner peripheral portion and the outer peripheral portion of the media.

In light of the foregoing, it is desired that such magnetooptical recording media as having little warpage formation, excellent oxidation resistance, a high C/N ratio, a broad recording power margin and in addition little dependence of recording power on linear velocity will make their appearance.

Extensive researches carried out by the present inventors with the view of such prior art technique as mentioned above have resulted in the finding that magnetooptical recording media having at least an aluminum alloy film and a nickel alloy film have excellent mechanical characteristics such as little warpage formation, little dependence of recording power on linear velocity and a broad recording margin as well as excellent oxidation resistance and recording sensitivity, and on the basis of this finding the present invention has been accomplished.

## OBJECT OF THE INVENTION

An object of the present invention is to provide magnetooptical recording media having excellent mechanical characteristics such as little warpage formation, a broad recording power margin,excellent erase-read-write cyclability, little dependence of recording power on linear velocity and a high C/N ratio.

## SUMMARY OF THE INVENTION

A first magnetooptical recording medium according to the present invention is characterized in that a protective film, a magnetooptical recording film, an aluminum alloy film and a nickel alloy film are formed on a substrate in that order.

A second magnetooptical recording medium according to the present invention is characterized in that a protective film, a magnetooptical recording film, a nickel alloy film and an aluminum alloy film are formed on a substrate in that order.

A third magnetooptical recording medium according to the present invention is characterized in that a protective film, a magnetooptical recording film, a protective film, an aluminum alloy film and a nickel alloy film are formed on a substrate in that order.

A fourth magnetooptical recording medium according to the present invention is characterized in that a protective film, a magnetooptical recording film, a protective film, a nickel alloy film and an aluminum alloy film are formed on a substrate in that order.

The magnetooptical recording media of the present invention as described above have excellent mechanical characteristics such as little warpage formation, little dependence of recording power on linear velocity, a broad recording power margin, excellent erase-read-write cyclability, and in addition excellent oxidation resistance and recording sensitivity.

## BRIEF DESCRIPTION OF THE DRAWINGS

Figs. 1 to 4 show diagrammatic sectional views of the first to fourth magnetooptical recording media according to the present invention.

## DETAILED DESCRIPTION OF THE INVENTION

The magnetooptical recording media according to the present invention are concretely illustrated below.

In the first magnetcoptical recording medium 10a of the invention, as illustrated in Fig. 1, a protective film 2, a magnetooptical recording film 3, an aluminum alloy film 4 and a nickel alloy film 5 are formed on a substrate 1 in that order.

In the second magnetooptical recording medium 10b of the invention, as illustrated in Fig. 2, a protective film 2, a magnetooptical recording film 3, a nickel alloy film 5 and an aluminum alloy film 4 are formed on a substrate 1 in that order.

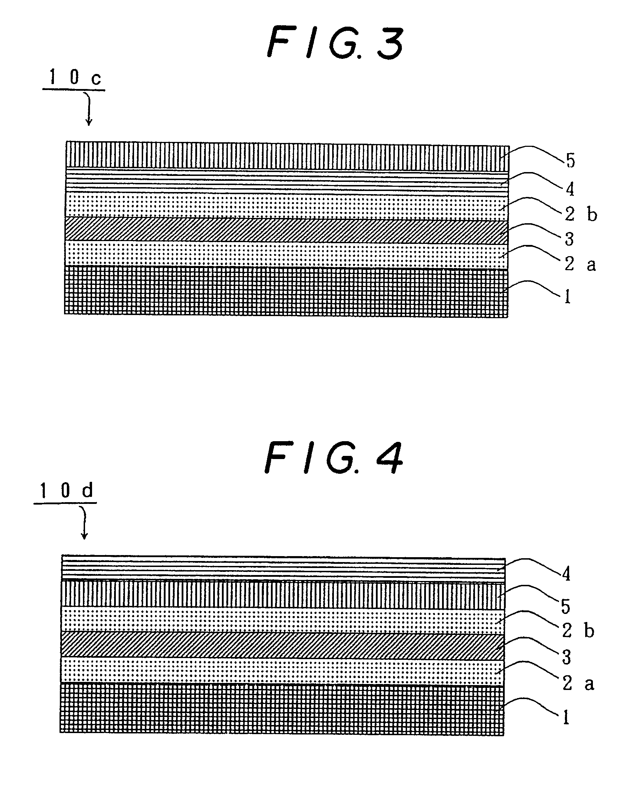

In the third magnetooptical recording medium 10c of the invention, as illustrated in Fig. 3, a protective film 2a, a magnetooptical recording film 3, a protective film 2b, an aluminum alloy film 4 and a nickel alloy film 5 are formed on a substrate 1 in that order.

In the fourth magnetooptical recording medium of the present invention, as illustrated in Fig. 4, a protective film 2a, a magnetooptical recording film 3, a protective film 2b, a nickel alloy film 5 and an aluminum alloy film 4 are formed on a substrate 1 in that order.

The substrate 1, the protective films 2, 2a, 2b, the magnetooptical recording film 3, the aluminum alloy film 4 and the nickel alloy film 5 are explained in order hereinafter.

### Substrate

Materials for the above-mentioned substrate 1 used in the invention are not particularly limited to specific ones. However, when laser beam is incident upon the substrate 1, the materials used therefor are preferably those which are transparent. Besides inorganic materials such as glass, aluminum and the like, such transparent materials include, for example, organic materials such as poly(methyl methacrylate), polycarbonate, polymer alloys of polycarbonate with polystyrene, such cycloolefin random copolymers as disclosed in U.S. Patent No. 4,614,778, such cycloolefin random copolymers as mentioned below, poly-4-methyl-1-pentene, epoxy resins, polyether sulfone, polysulfone, polyether imide and the like. Of these organic materials, preferred are poly(methyl methacrylate), polycarbonate, such cycloolefin random copolymers as disclosed in U.S. Patent No. 4,614,778 and the cycloolefin random copolymers as mentioned below.

From the standpoint of good adhesion particularly to the protective film, a small double refractive index, and oxidation resistance of the magnetooptical recording medium, particularly desirable materials for the substrate used in the present invention are cycloolefin random copolymers of ethylene and a cycloolefin represented by the following formula [I] or [II].

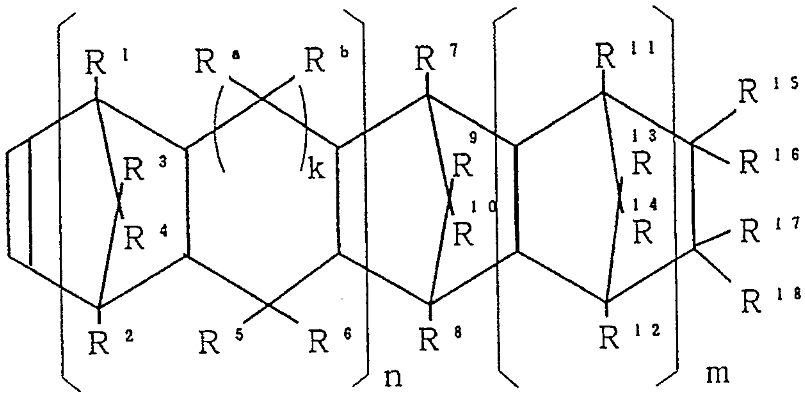

[I]

wherein n is 0 (zero) or 1, m is 0 (zero) or a positive integer, k is 0 (zero) or 1, $R^1$ - $R^{18}$, $R^a$ and $R^b$ are individually hydrogen, halogen or hydrocarbon group, $R^{15}$ - $R^{18}$ may, linking together, form a mono- or polycyclic ring which may have a double bond, and $R^{15}$ together with $R^{16}$ or $R^{17}$ together with $R^{18}$ may form an alkylidene group.

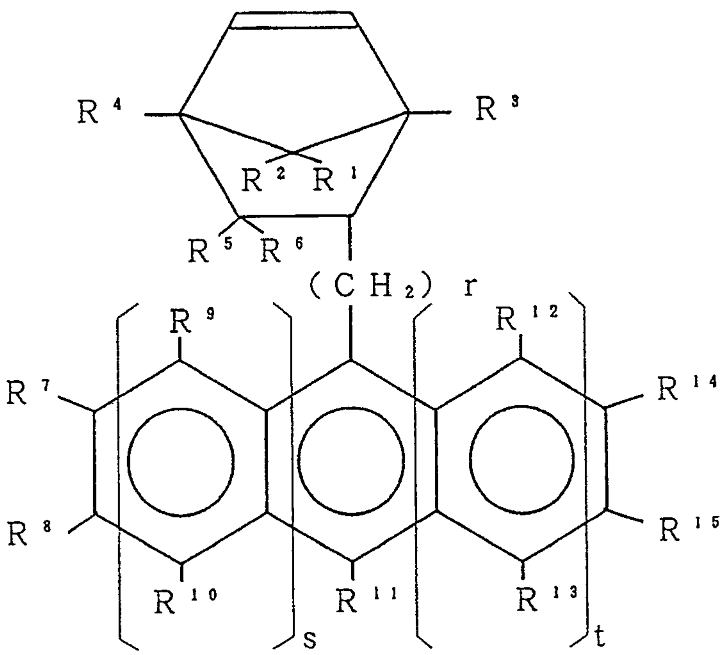

[II]

wherein r is 0 (zero) or an integer of at least 1, s and t are each 0 (zero), 1 or 2, $R^1$-$R^{15}$ are individually an atom or group selected from the group consisting of hydrogen, halogen, aliphatic hydrocarbon group, aromatic hydrocarbon group and alkoxy, and $R^5$ (or $R^6$) and $R^9$ (or $R^7$) may be linked together through an alkylene group of 1-3 carbon atoms or may be linked together directly without through any group.

In the above-mentioned formula [I], n is 0 (zero) or 1, preferably 0 (zero), and m is 0 (zero) or a positive integer, preferably 0-3. In the above-mentioned formula [II], r is 0 (zero) or an integer of at least 1, preferably an integer of 0-3.

$R^1$-$R^{18}$, $R^a$ and $R^b$ (formula [I]) or $R^1$-$R^{15}$ (formula [II]) individually represent an atom or group selected from the group consisting of hydrogen, halogen and hydrocarbon, wherein the halogen includes, for example, fluorine, chlorine, bromine and iodine atoms, and the hydrocarbon group includes usually alkyl of 1-6 carbon atoms and cycloalkyl of 3-6 carbon atoms. Concrete examples of the alkyl include methyl, ethyl, isopropyl, isobutyl and amyl, and those of the cycloalkyl include cyclohexyl, cyclopropyl, cyclobutyl and cyclopentyl.

In the above-mentioned formula [II], $R^5$ (or $R^6$) and $R^9$ (or $R^7$) may be linked together through an alkylene group of 1-3 carbon atoms or may be linked together directly without through any group.

In the above-mentioned formula [I], $R^{15}$-$R^{18}$ may form, linking together (in combination), a mono- or

polycyclic ring which may have a double bond, and $R^{15}$ together with $R^{16}$, or $R^{17}$ together with $R^{18}$ may form an alkylidene of 2-4 carbon atoms, and concrete examples thereof include ethylidene, propylidene, isopropylidene and isobutylidene.

The cycloolefins represented by the above-mentioned formula [I] or [II] may easily be prepared by condensing cyclopentadienes with corresponding olefins or cycloolefins through Diels-Alder reaction.

The cycloolefins are represented by the above-mentioned formule [I] or [II] and used in the present invention include compounds listed below.

Bicyclo[2.2.1]hept-2-ene derivatives such as those mentioned below.

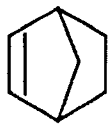

Bicyclo[2.2.1]hept-2-ene

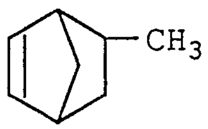

6-Methylbicyclo[2.2.1]hept-2-ene

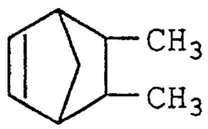

5,6-Dimethylbicyclo[2.2.1]-hept-2-ene

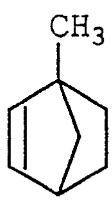

1-Methylbicyclo[2.2.1]hept-2-ene

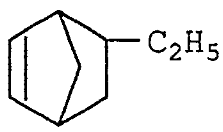

6-Ethylbicyclo[2.2.1]hept-2-ene

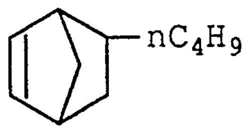

6-n-Butylbicyclo[2.2.1]hept-2-ene

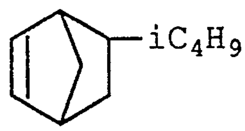

6-Isobutylbicyclo[2.2.1]hept-2-ene

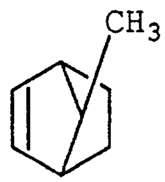

7-Methylbicyclo[2.2.1]hept-2-ene

Tetracyclo[$4.4.0.1^{2,5}.1^{7,10}$]-3-dodecene derivatives such as those mentioned below.

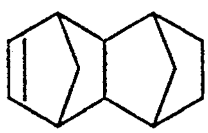

Tetracyclo[$4.4.0.1^{2,5}.1^{7,10}$]-3-dodecene

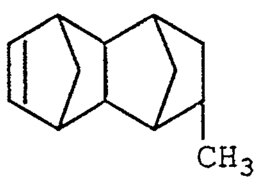

8-Methyltetracyclo-[$4.4.0.1^{2,5}.1^{7,10}$]-3-dodecene

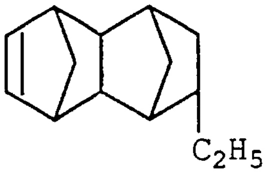

8-Ethyltetracyclo-[4.4.0.$1^{2,5}$.$1^{7,10}$]-3-dodecene

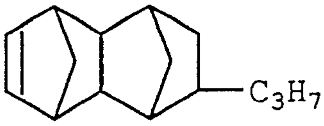

8-Propyltetracyclo-[4.4.0.$1^{2,5}$.$1^{7,10}$]-3-dodecene

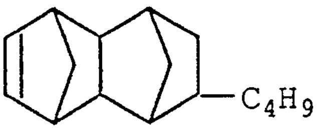

8-Butyltetracyclo-[4.4.0.$1^{2,5}$.$1^{7,10}$]-3-dodecene

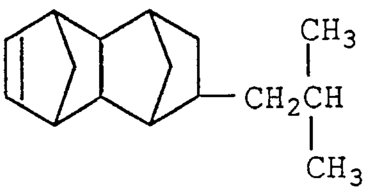

8-Isobutyltetracyclo-[4.4.0.$1^{2,5}$.$1^{7,10}$]-3-dodecene

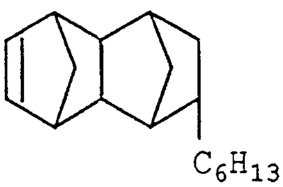

8-Hexyltetracyclo[4.4. 0.$1^{2,5}$.$1^{7,10}$]-3-dodecene

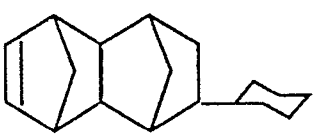

8-Cyclohexyltetracyclo-[4.4.0.$1^{2,5}$.$1^{7,10}$]-3-dodecene

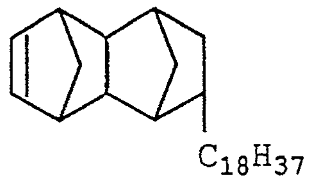

8-Stearyltetracyclo-

$[4.4.0.1^{2,5}.1^{7,10}]$-3-dodecene

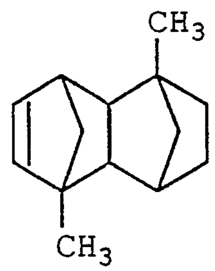

5,10-Dimethyltetracyclo-

$[4.4.0.1^{2,5}.1^{7,10}]$-3-dodecene

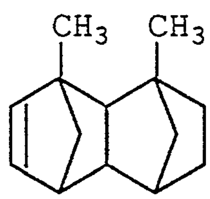

2,10-Dimethyltetracyclo-

$[4.4.0.1^{2,5}.1^{7,10}]$-3-dodecene

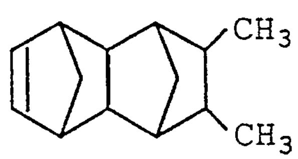

8,9-Dimethyltetracyclo-

$[4.4.0.1^{2,5}.1^{7,10}]$-3-dodecene

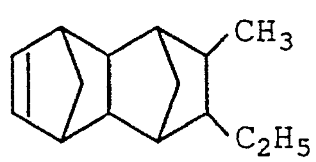

8-Ethyl-9-methyltetracyclo-

$[4.4.0.1^{2,5}.1^{7,10}]$-3-dodecene

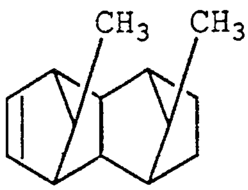

11,12-Dimethyltetracyclo-[4.4.0.1$^{2,5}$.1$^{7,10}$]-3-dodecene

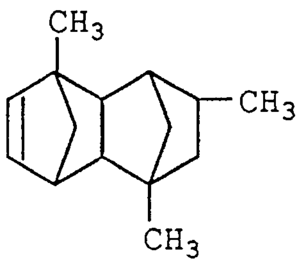

2,7,9-Trimethyltetracyclo-[4.4.0.1$^{2,5}$.1$^{7,10}$]-3-dodecene

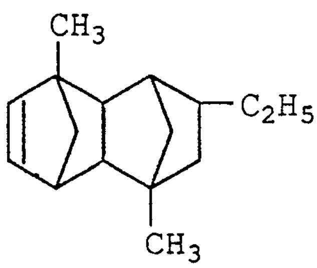

9-Ethyl-2,7-dimethyltetracyclo-[4.4.0.1$^{2,5}$.1$^{7,10}$]-3-dodecene

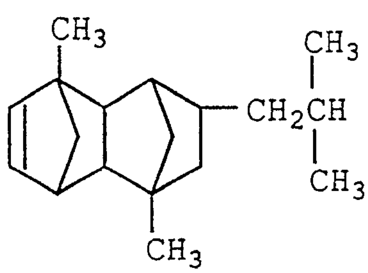

9-Isobutyl-2,7-dimethyltetracyclo-[4.4.0.1$^{2,5}$.1$^{7,10}$]-3-dodecene

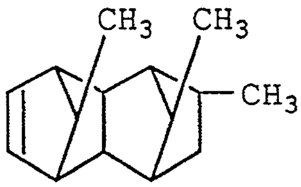

9,11,12-Trimethyltetracyclo-[4.4.0.$1^{2,5}$.$1^{7,10}$]-3-dodecene

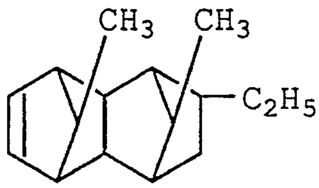

9-Ethyl-11,12-dimethyltetracyclo-[4.4.0.$1^{2,5}$.$1^{7,10}$]-3-dodecene

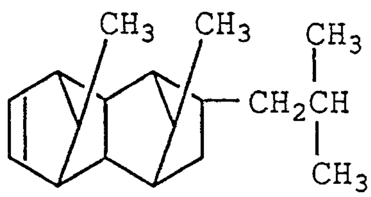

9-Isobutyl-11,12-dimethyltetracyclo-[4.4.0.$1^{2,5}$.$1^{7,10}$]-3-dodecene

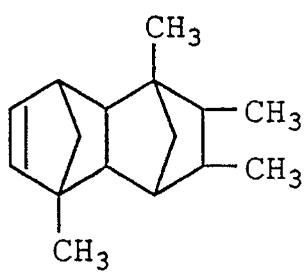

5,8,9,10-Tetramethyltetracyclo-[4.4.0.$1^{2,5}$.$1^{7,10}$]-3-dodecene

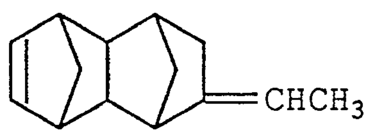

8-Ethylidenetetracyclo-[4.4.0.$1^{2,5}$.$1^{7,10}$]-3-dodecene

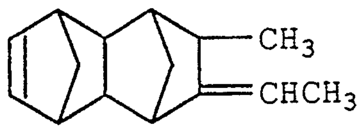

8-Ethylidene-9-methyltetracyclo-$[4,4,0,1^{2.5},1^{7.10}]$-3-dodecene

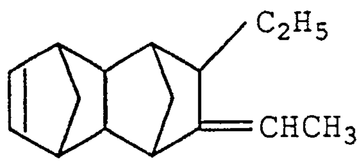

8-Ethylidene-9-ethyltetracyclo-$[4.4.0.1^{2,5}.1^{7,10}]$-3-dodecene

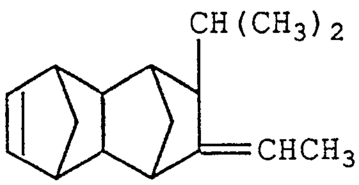

8-Ethylidene-9-isopropyltetracyclo-$[4.4.0.1^{2,5}.1^{7,10}]$-3-dodecene

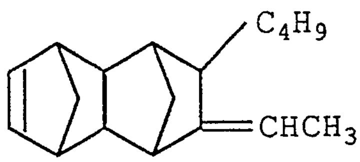

8-Ethylidene-9-butyltetracyclo-$[4.4.0.1^{2,5}.1^{7,10}]$-3-dodecene

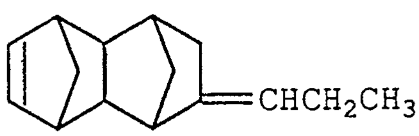

8-n-Propylidenetetracyclo-$[4.4.0.1^{2,5}.1^{7,10}]$-3-dodecene

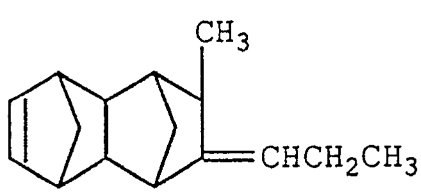

8-n-Propylidene-9-methyltetracyclo-$[4.4.0.1^{2,5}.1^{7,10}]$-3-dodecene

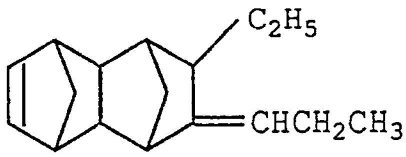

8-n-Propylidene-9-ethyltetracyclo-$[4.4.0.1^{2,5}.1^{7,10}]$-3-dodecene

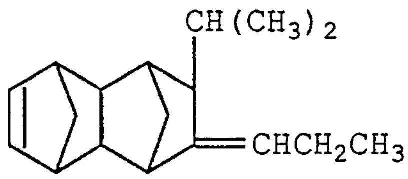

8-n-Propylidene-9-isopropyltetracyclo$[4.4.0.1^{2,5}.1^{7,10}]$-3-dodecene

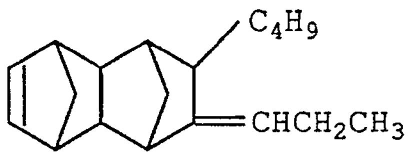

8-n-Propylidene-9-butyltetracyclo-$[4.4.0.1^{2,5}.1^{7,10}]$-3-dodecene

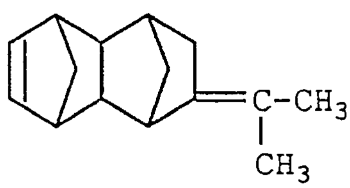

8-Isopropylidenetetracyclo-$[4.4.0.1^{2,5}.1^{7,10}]$-3-dodecene

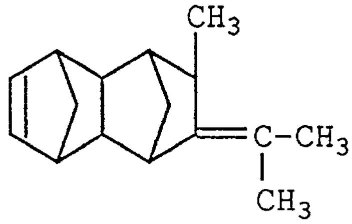

8-Isopropylidene-9-methyltetracyclo-$[4.4.0.1^{2,5}.1^{7,10}]$-3-dodecene

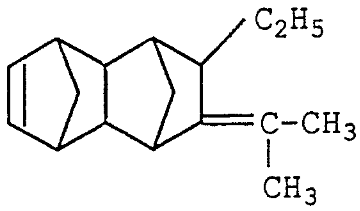

8-Isopropylidene-9-ethyltetracyclo-[$4.4.0.1^{2,5}.1^{7,10}$]-3-dodecene

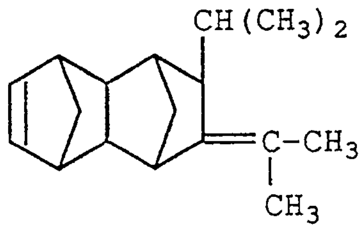

8-Isopropylidene-9-isopropyltetracyclo[$4.4.0.1^{2,5}.1^{7,10}$]-3-dodecene

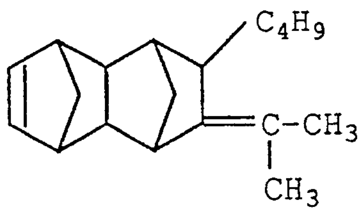

8-Isopropylidene-9-butyltetracyclo-[$4.4.0.1^{2,5}.1^{7,10}$]-3-dodecene;

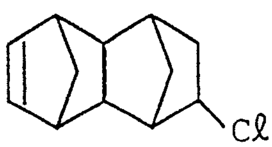

8-Chlorotetracyclo[$4.4.0.1^{2,5}.1^{7,10}$]-3-dodecene

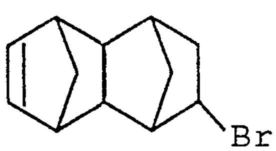

8-Bromotetracyclo[$4.4.0.1^{2,5}. 1^{7,10}$]-3-dodecene

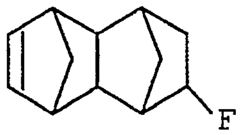

8-Fluorotetracyclo[4.4.0.$1^{2,5}$.$1^{7,10}$]-3-dodecene

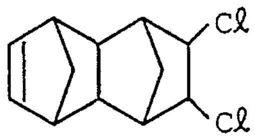

8,9-Dichlorotetracyclo-[4.4.0.$1^{2,5}$.$1^{7,10}$]-3-dodecene

Hexacyclo[6.6.1.$1^{3,6}$.$1^{10,13}$.$0^{2,7}$.$0^{9,14}$]-4-heptadecene derivatives such as those mentioned below.

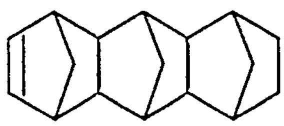

Hexacyclo[6.6.1.$1^{3,6}$.$1^{10,13}$.$0^{2,7}$.$0^{9,14}$]-4-heptadecene

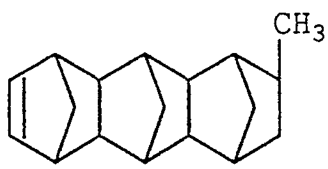

12-Methylhexacyclo[6.6.1.$1^{2,6}$.$1^{10,13}$.$0^{2,7}$.$0^{9,14}$]-4-heptadecene

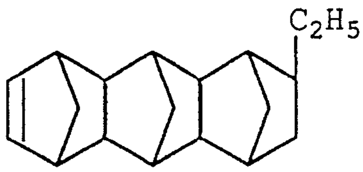

12-Ethylhexacyclo[6.6.1.$1^{3,6}$.$1^{10,13}$.$0^{2,7}$.$0^{9,14}$]-4-heptadecene

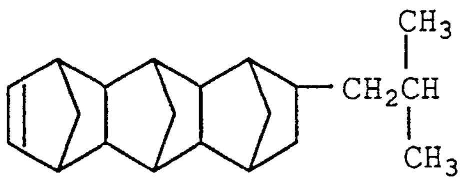

12-Isobutylhexacyclo[6.6.1.$1^{3,6}$.$1^{10,13}$.$0^{2,7}$.$0^{9,14}$]-4-heptadecene

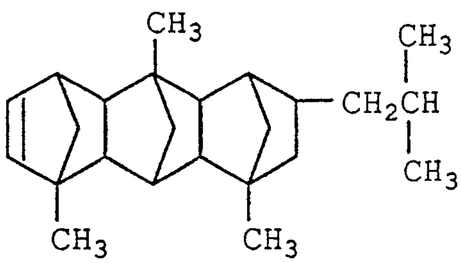

1.6.10-Trimethyl-12-isobutylhexacyclo[6.6.1.$1^{3,6}$.$1^{10,13}$.$0^{2,7}$.$0^{9,14}$]-4-heptadecene

Octacyclo[8.8.0.$1^{2,9}$.$1^{4,7}$.$1^{11,18}$.$1^{13,16}$.$0^{3,8}$.$0^{12,17}$]-5-docosene derivatives such as those mentioned below.

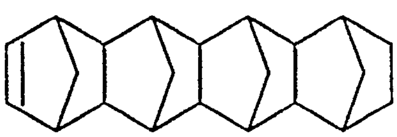

Octacyclo[8.8.0.$1^{2,9}$.$1^{4,7}$.$1^{11,18}$.$1^{13,16}$.$0^{3,8}$.$0^{12,17}$]-5-docosene

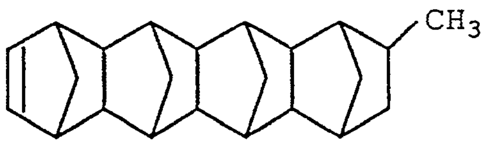

15-Methyloctacyclo-$[8.8.0.1^{2,9}.1^{4,7}.1^{11,18}.0^{3,8}.0^{12,17}]$-5-docosene

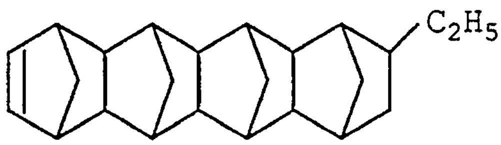

15-Ethyloctacyclo$[8.8.0.1^{2,9}.1^{4,7}.1^{11,18}.1^{13,16}.0^{3,6}.0^{12,17}]$-5-docosene

Pentacyclo$[6,6,1,1^{3.6},0^{2.7},0^{9.14}]$-4-hexadecene derivatives such as those mentioned below.

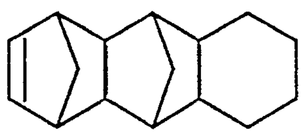

Pentacyclo$[6,6,1,1^{3.6},0^{2.7},0^{9.14}]$-4-hexadecene

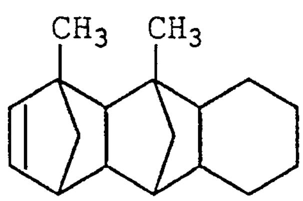

1,3-Dimethylpentacyclo-$[6,6,1,1^{3.6},0^{2.7},0^{9.14}]$-4-hexadecene

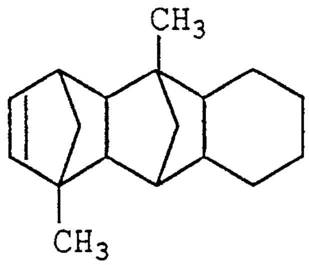

1,6-Dimethylpentacyclo-

$[6,6,1,1^{3.6},0^{2.7},0^{9.14}]$-4-hexadecene

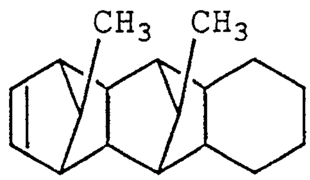

15,16-Dimetylpentacyclo-

$[6,6,1,1^{3.6},0^{2.7},0^{9.14}]$-4-hexadecene

Heptacyclo-5-eicosene derivatives or heptacyclo-5-heneicosene derivatives such as those mentioned below.

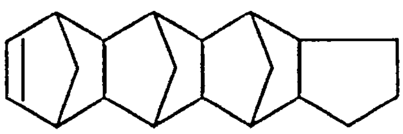

$Heptacyclo[8.8.0.1^{2,9}.1^{4,7}.$

$1^{11,17}.0^{3,8}.0^{12,16}]$-5-eicosene

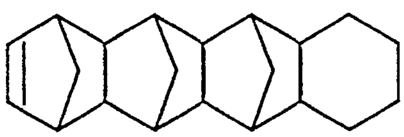

$Heptacyclo[8.8.0.1^{2,9}.1^{4,7}.$

$1^{11,18}.0^{3,6}.0^{12,17}]$-5-heneicosene

Tricyclo$[4,3,0,1^{2.5}]$-3-decene derivatives such as those mentioned below.

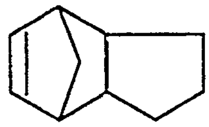

Tricyclo[4.3.0.1$^{2,5}$]-3-decene

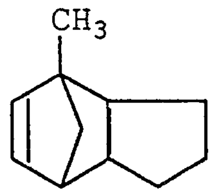

2-Methyltricyclo[4.3.0.1$^{2,5}$]-3-decene

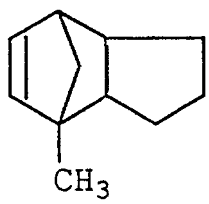

5-Methyltricyclo[4.3.0.1$^{2,5}$]-3-decene

Tricyclo[4.4.0.1$^{2,5}$]-3-undecene derivatives such as those mentioned below.

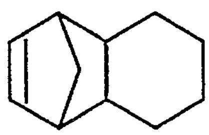

Tricyclo[4.4.0.1$^{2,5}$]-3-undecene

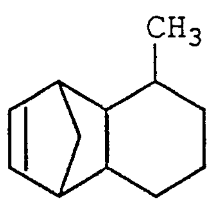

10-Methyl-tricyclo[4.4.0.1$^{2,5}$]-3-undecene

Pentacyclo[6.5.1.1$^{3,6}$.0$^{2,7}$.0$^{9,13}$]-4-pentadecene derivatives such as those mentioned below.

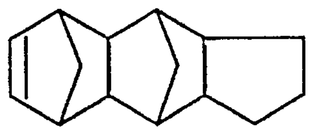

Pentacyclo[6.5.1.1$^{3,6}$.0$^{2,7}$.0$^{9,13}$]-4-pentadecene

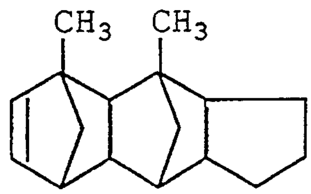

1,3-Dimethylpentacyclo-[6.5.1.1$^{3,6}$.0$^{2,7}$.0$^{9,13}$]-4-pentadecene

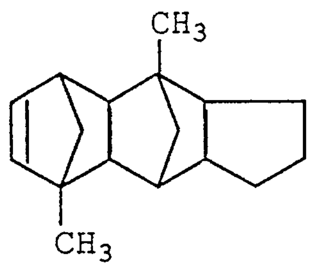

1,6-Dimethylpentacyclo-[6.5.1.1$^{3,6}$.0$^{2,7}$.0$^{9,13}$]-4-pentadecene

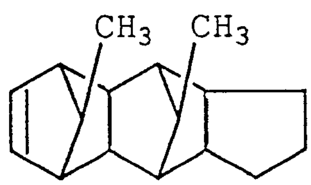

14,15-Dimethylpentacyclo-[6.5.1.1$^{3,6}$.0$^{2,7}$.0$^{9,13}$]-4-pentadecene

Diene compounds such as mentioned below.

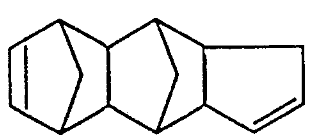

Pentacyclo[6.5.1.1$^{3,6}$.0$^{2,7}$.0$^{9,13}$]-4,10-pentadecadiene

Pentacyclo[4.7.0.1$^{2,5}$.0$^{8,13}$.0$^{9,12}$]-3-pentadecene derivatives such as those mentioned below.

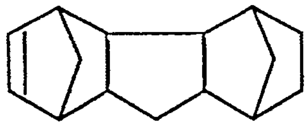

Pentacyclo[4.7.0.$1^{2,5}$.$0^{8,13}$.$0^{9,12}$]-3-pentadecene

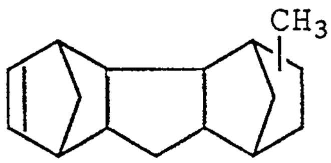

Methyl-substituted pentacyclo[4.7.0.$1^{2,5}$.$0^{8,13}$.$0^{9,12}$]-3-pentadecene

Heptacyclo[7,8,0,$1^{3.6}$,$0^{2.7}$,$1^{10.17}$,$0^{11.16}$,$1^{12.15}$]-4-eicosene derivatives such as those mentioned below.

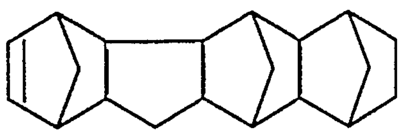

Heptacyclo[7.8.0.$1^{3,6}$.$0^{2,7}$.$1^{10,17}$.$0^{11,16}$.$1^{12,15}$]-4-eicosene

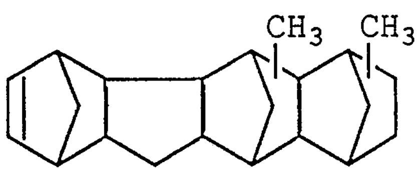

Dimethyl-substituted heptacyclo-[7.8.0.$1^{3,6}$.$0^{2,7}$.$1^{10,17}$.$0^{11,16}$.$1^{12,15}$]-4-eicosene

Nonacyclo[9.10.1.$1^{4,7}$.$0^{3,8}$.$1^{2,10}$,$0^{12,21}$.$1^{13,20}$.$0^{14,19}$. $1^{15,18}$]-5-pentacosene derivatives such as those mentioned below.

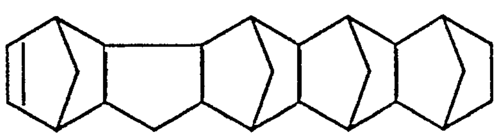

Nonacyclo[9.10.1.$1^{4,7}$.$0^{3,8}$.$1^{2,10}$.$0^{12,21}$.$1^{13,20}$.$0^{14,19}$.$1^{15,18}$]-5-pentacosene

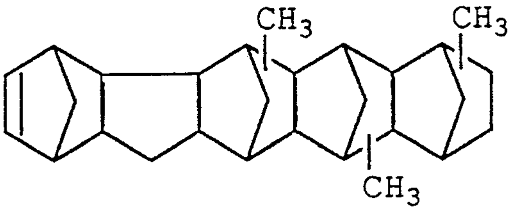

Trimethyl-substituted nonacyclo[9.10.1.$1^{4,7}$.$0^{3,8}$.$1^{2,10}$.$0^{12,21}$.$1^{13,20}$.$0^{14,19}$. $1^{15,18}$]-5-pentacosene.

Pentacyclo[8.4.0.$1^{2,5}$.$1^{9,12}$.$0^{8,13}$]-3-hexadecene derivatives such as those mentioned below.

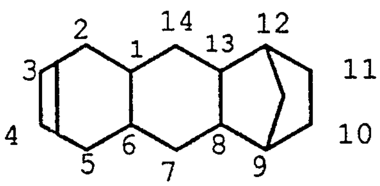

Pentacyclo[8.4.0.$1^{2,5}$.$1^{9,12}$.$0^{8,13}$]-3-hexadecene

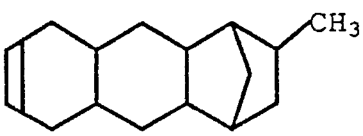

11-Methylpentacyclo[8.4.0.$1^{2,5}$.$1^{9,12}$.$0^{8,13}$]-3-hexadecene

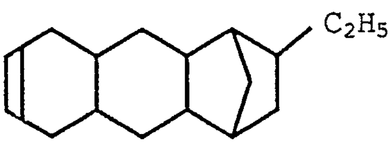

11-Ethylpentacyclo[8.4.0.$1^{2,5}$.$1^{9,12}$.$0^{8,13}$]-3-hexadecene

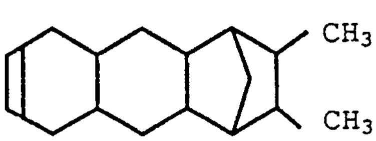

10,11-Dimethylpentacyclo[8.4.0.$1^{2,5}$.$1^{9,12}$.$0^{8,13}$]-3-hexadecene

Heptacyclo[8.8.0.$1^{4,7}$.$1^{11,18}$.$1^{13,16}$.$0^{3,8}$.$0^{12,17}$]-5-heneicosene derivatives such as those mentioned below.

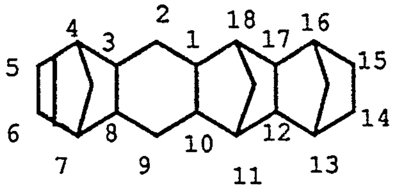

Heptacyclo[8.8.0.1^{4,7}.1^{11,18}.1^{13,16}.0^{3,8}.0^{12,17}]-5-heneicosene

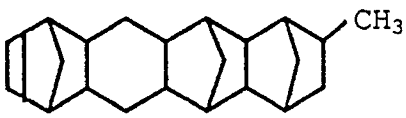

15-Methylheptacyclo[8.8.0.1^{4,7}.1^{11,18}.1^{13,16}.0^{3,8}.0^{12,17}]-5-heneicosene

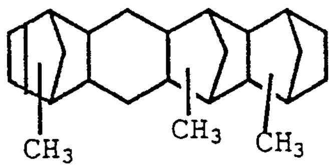

Trimethyl-substituted heptacyclo[8.8.0.1^{4,7}.1^{11,18}.1^{13,16}.0^{3,8}.0^{12,17}]-5-heneicosene

Nonacyclo [10.10.1.1^{5,8}.1^{14,21}.1^{16,19}.0^{2,11}.0^{4,9}.0^{13,22}.0^{15,20}]-6-hexacosene derivatives such as those mentioned below.

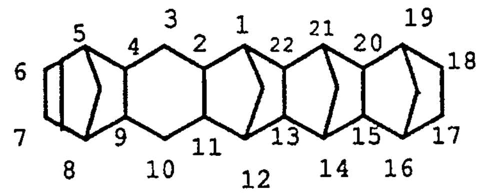

Nonacyclo [$10.10.1.1^{5,8}.1^{14,21}.1^{16,19}.0^{2,11}.0^{4,9}.0^{13,22}.0^{15,20}$]-6-hexacosene

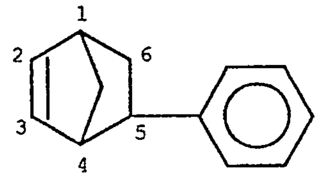

5-Phenyl-bicyclo[2.2.1]hept-2-ene

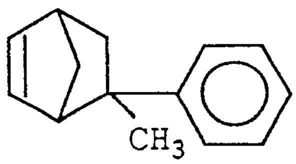

5-Methyl-5-phenyl-bicyclo[2.2.1]-hept-2-ene

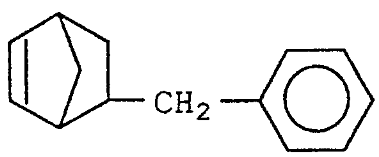

5-Benzyl-bicyclo[2.2.1]hept-2-ene

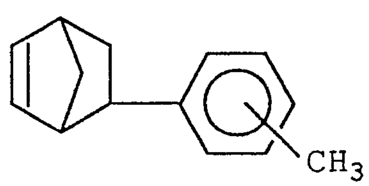

5-Tolyl-bicyclo[2.2.1]hept-2-ene

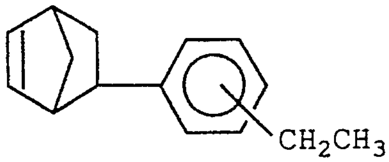

5-(Ethylphenyl)-bicyclo[2.2.1]hept-2-ene

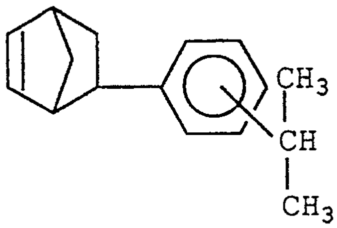

5-(Isopropylphenyl)-bicyclo[2.2.1]-hept-2-ene

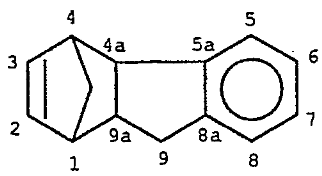

1,4-Methano-1,4,4a,9a-tetrahydro-fluorene

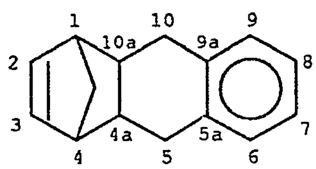

1,4-Methano-1,4,4a,5,10,10a-hexahydroanthracene

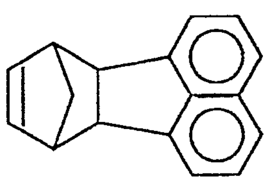

Cyclopentadiene-acenaphthylene addition product

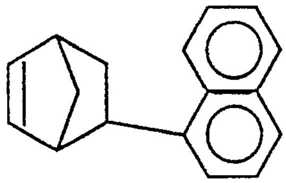

5-(α-Naphthyl)-bicyclo[2.2.1]hept-2-ene

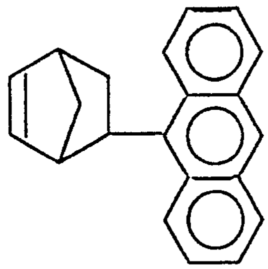

5-(Acetolacenyl)-bicyclo[2.2.1]hept-2-ene

As the copolymer of ethylene and a cycloolefin represented by the general formula [I] or [II] as described above, preferably used is a cycloolefin random copolymer (designated as cycloolefin random copolymer [A] hereinafter) having an intrinsic viscosity [η] of 0.05 to 10 dl/g as measured in decalin at 135°C and a softening temperature (TMA) of not lower than 70°C. The cycloolefin random copolymer [A] may also be incorporated, if desired, with a cycloolefin random copolymer (designated as cycloolefin random copolymer [B] hereinafter) of ethylene and a cycloolefin represented by the general formula [I] or [II], having an intrinsic viscosity [η] of 0.05 to 5 dl/g as measured in decalin at 135°C and a softening temperature (TMA) of below 70°C.

The cycloolefin random copolymer [A] and the cyclcolefin random copolymer [B] comprising ethylene units and the aforementioned cycloolefin units as essential components may contain, if necessary, in addition to these two essential components, other copolymerizable unsaturated monomer units within limits so long as the object of the invention is not impaired. Such copolymerizable unsaturated monomer units useful in the cycloolefin random copolymer may be derived from monomers including α-olefins of 3-20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicosene, and these unsaturated monomers may be used, for example, in amounts less than equimolar amount of the ethylene units present in the resulting random copolymer.

In the cycloolefin random copolymer [A] as mentioned above, a recurring unit (a) derived from ethylene is present in a proportion of 40-85 mol%, preferably 50-75 mol%, and a recurring unit (b) derived from the cycloolefin is present in a proportion of 15-60 mol%, preferably 25-50 mol%, and the recurring units (a) and (b) are arranged substantially linear at random. The constitution in the resulting random copolymer of ethylene unit and cycloolefin unit was determined by $^{13}C$-NMR. The fact that this random copolymer is substantially linear and has no gel-like crosslinked structure can be confirmed by the fact that the copolymer completely dissolves in decalin at 135°C.

The cycloolefin random copolymer [A] has an intrinsic viscosity [η], as measured in decalin at 135°C, of 0.05-10 dl/g, preferably 0.08-5 dl/g.

A softening temperature (TMA), as measured with a thermal mechanical analyzer, of the cycloolefin random copolymer [A] is at least 70°C, preferably 90-250°C and especially 100-200°C. This softening temperature (TMA) was determined by the behavior on heat deformation of a sheet of a 1 mm thick of the cycloolefin random copolymer using Thermomechanical Analyser (manufactured by Du Pont). That is, a quartz needle is put vertically on the sheet under a load of 49 g, the sheet is then heated at a heating rate of 5°C/min, and the temperature at which the needle has intruded into the sheet to a depth of 0.635 mm is taken as TMA. A glass transition temperature (Tg) of this cycloolefin random copolymer [A] is preferably 50-230°C, more preferably 70-210°C.

A crystallinity index, as measured by X ray diffractiometry, of the cycloolefin random copolymer [A] is

preferably 0-10 %, more preferably 0-7 %, especially 0-5 %.

In the present invention, it is desirable to form a substrate from a cycloolefin random copolymer composition prepared by incorporating into the cycloolefin random copolymer [A] having the softening temperature (TMA) of at least 70°C a cycloolefin random copolymer [B] which is a copolymer of ethylene and cycloolefin represented by the aforementioned formula [I] or [II] having an intrinsic viscosity [$\eta$] of 0.05-5 dl/g and a softening temperature (TMA) of less than 70°C.

In the cycloolefin random copolymer [B] having the softening temperature (TMA) of less than 70°C, a recurring unit (a) derived from ethylene is present in a proportion of 60-98 mol%, preferably 60-95 mol%, and a recurring unit (b) derived from the cycloolefin is present in a proportion of 2-40 mol%, preferably 5-40 mol%, and the recurring units (a) and (b) are arranged substantially linear at random. The constitution in the resulting random copolymer of ethylene and cycloolefin was determined by $^{13}$C-NMR. The fact that this cycloolefin random copolymer [B] is substantially linear and has no gel-like crosslinked structure can be confirmed by the fact that the copolymer completely dissolves in decalin at 135°C.

The cycloolefin random copolymer [B] has an intrinsic viscosity [$\eta$], as measured in decalin at 135°C, of 0.05-5 dl/g, preferably 0.08-3 dl/g.

A softening temperature (TMA), as measured with a thermal mechanical analyzer, of the cycloolefin random copolymer [B] is less than 70°C, preferably -10 to 60°C and especially 10 to 55°C. A glass transition temperature (Tg) of this cycloolefin random copolymer [B] is usually -30 to 60°C, preferably -20 to 50°C.

A crystallinity index, as measured by X-ray diffractiometry, of the cycloolefin random copolymer [B] is preferably 0-10%, more preferably 0-7% and especially 0-5%.

In the case where the above-mentioned cycloolefin random copolymer [A] and [B] are used as a raw material for the substrate in the present invention, the weight ratio in the composition of the cycloolefin random copolymer [A]/the cycloolefin random copolymer [B] is from 100/0.1 to 100/10, preferably 100/0.3 to 100/7 and especially from 100/0.5 to 100/5. By using this cycloolefin copolymer composition in which the above-mentioned [B] component is incorporated into the the above-mentioned component [A] in the proportion as defined above, the substrate obtained therefrom may have such an effect that adhesion between the substrate and the protective film used in the present invention is further improved under severe conditions in comparison with a substrate composed of the [A] component alone, while excellent transparency and surface smoothness inherent in the substrate are maintained. When the above-mentioned cycloolefin random copolymer composition containing a blend of the [A] and [B] components is used for a substrate, excellent adhesion obtained between the substrate and the protective film used in the invention has such characteristics that no undesirable changes in the adhesion thus obtained will occur even after allowing the substrate bearing the protective film to stand under the circumstances of high temperature and humidity.

The above-mentioned cycloolefin random copolymer [A] and [B] constituting the substrate of the invention may be prepared by suitably selecting the conditions under which these copolymers are prepared in accordance with the processes proposed by the present applicant in Japanese Patent L-O-P Nos. 168708/1985, 120816/1986, 115912/1986, 271308/1986, 272216/1986, 252406/1987 and 252407/1987.

In the cycloolefin random copolymers as mentioned above, though constituent units (b) derived form a cycloolefin represented by the formula [I] or [II] mentioned above are considered to form a recurring unit of a structure represented by the formula [III] or [IV] described below, the constituent units (b) may also be sometimes bonded partially by ring opening polymerization, and they may also be hydrogenated if necessary:

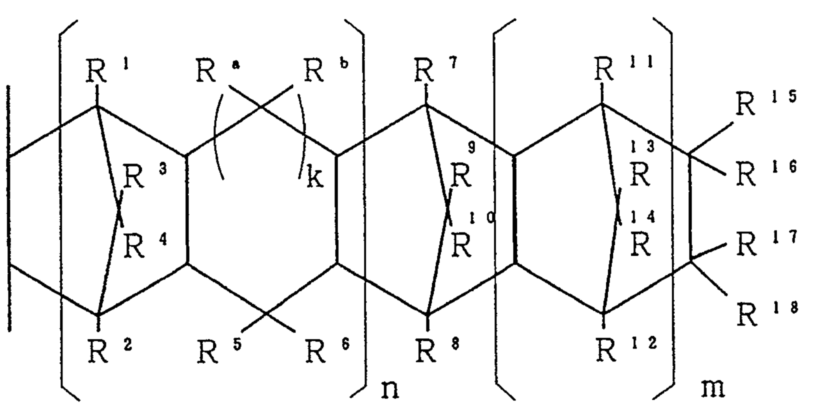

··· [ III ]

wherein k, m, n and $R^1$ to $R^{18}$, $R^a$ and $R^b$ are as defined in the above-mentioned formula [I];

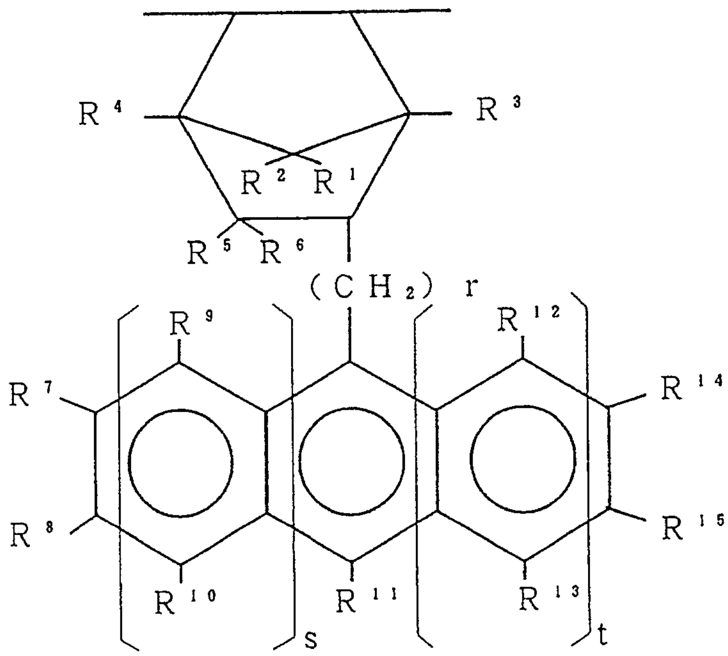

... [IV]

wherein r, s, t and $R^1$-$R^{15}$ are as defined in the above-mentioned formula [II].

As described above, there may also be used, in place of the above-mentioned random copolymer of ethylene and a cycloolefin, a cycloolefin ring opening polymer or copolymer obtained by ring opening one or more types of cycloolefin monomers, or a hydrogenated product of the polymer or copolymer. The cycloolefin ring opening polymer, the cycloolefin ring opening copolymer and a hydrogenated product of the polymer or copolymer as mentioned above are illustrated below with an example of a cycloolefin represented by the above-mentioned formula [I]. The cycloolefin of the formula [I] is considered to react as described below to form a ring opening copolymer and a hydrogen addition product:

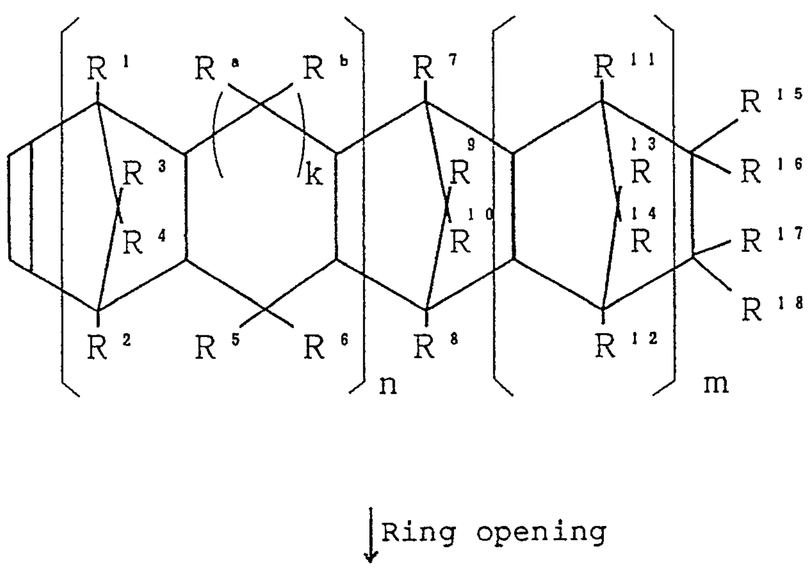

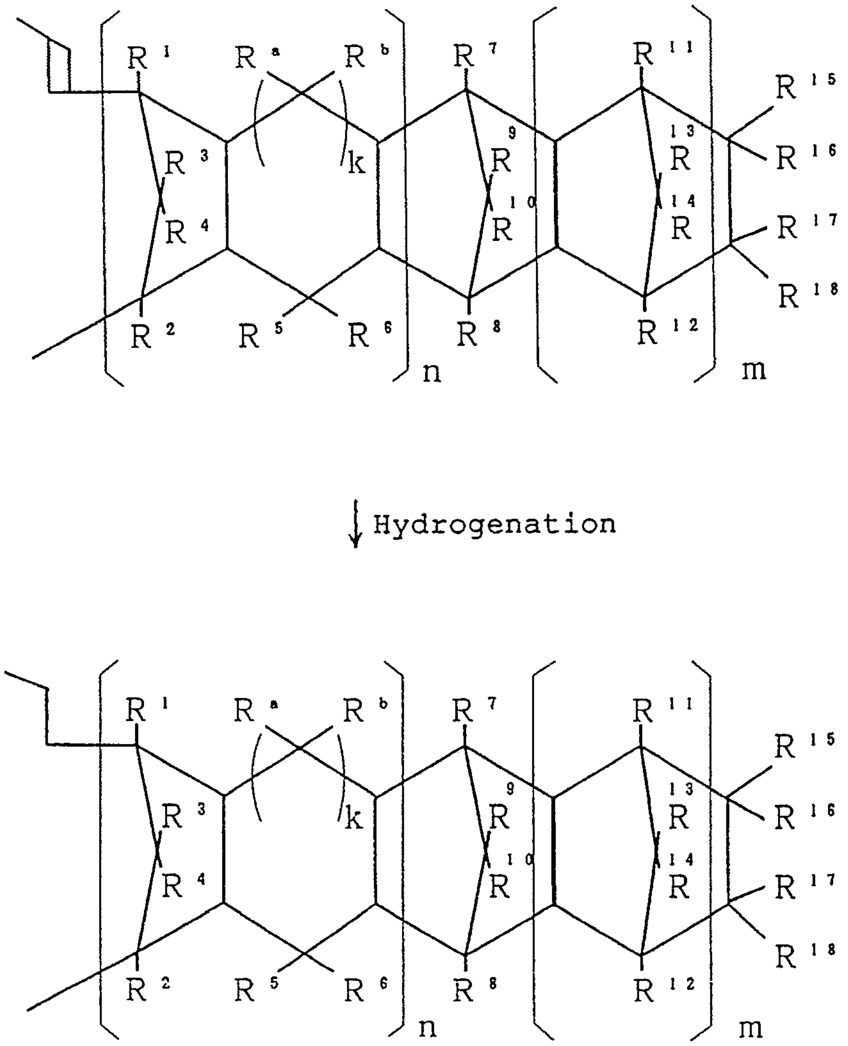


Examples of such polymers include a ring opening copolymer of tetracyclododecene with norbornene or its derivative, and a hydrogen addition product of the copolymer.

Furthermore, in the present invention, a part of the ring opening polymer, the ring opening copolymer, a hydrogenated thereof and the cycloolefin random copolymer as described above may be modified with an unsaturated carboxylic acid such as maleic anhydride. Such modified products can be manufactured by reacting the cycloolefin resin as described above with an unsaturated carboxylic acid or a derivative of the acid such as the anhydride of the acid or an alkyl ester of the acid. Moreover, the content of the constituent units derived with the modifier in the cycloolefin resin in this case is usually not greater than 50 to 10 mol%. Such a cycloolefin resin modified product may be manufactured by incorporating a modifier into the cycloolefin resin so that a desired modification ratio can be obtained, and carrying out graft polymerization, or it may also be manufactured by preparing the modified product having a high modification ratio, and mixing the modified product with the cycloolefin resin which is not modified.

In the present invention, there can be used the above-mentioned ring opening polymer, ring opening copolymer, a hydrogenated thereof, the cycloolefin random copolymer and a modified product of the random copolymer either singly or in combination.

Furthermore, in the present invention, when the above-described cycloolefin random copolymer is manufactured, a cycloolefin other than those represented by the formula [I] or [II] mentioned above may also be polymerized so long as the polymerization does not impair the physical properties of the resultant polymer, etc. Examples of such a cycloolefin include

cyclobutene,
cyclopentene,
cyclohexene,
3,4-dimethylcyclohexene,

3-methylcyclohexene,
2-(2-methylbutyl)-1-cyclohexene,
2,3,3a,7a-tetrahydro-4,7-methano-1H-indene, and
3a,5,6,7a-tetrahydro-4,7-methano-1H-indene.
Such other cycloolefins mentioned above can be used either singly or in combination, and they are usually used in an amount of 0 to 50 mol%.

In addition to the above-mentioned components [A] and [B], the substrates of the magnetooptical recording media of the invention may be incorporated with various additives such as rubber components for improving impact strength, heat stabilizers, weathering stabilisers, antistatic agents, slip agents, anti-blocking agents, anti-fogging agents, lubricants, dyes, pigments, natural oil, synthetic oil and wax, and the proportion of incorporating these additives may be suitably decided. Concrete examples of the stabilizers which may be used optionally include phenolic anticxidants such as tetrakis[methylene-3(3,5-di-t-butyl-4-hydroxyphenyl)propionate]methane, β-(3,5-di-t-butyl-4-hydroxyphenyl)propionic acid alkyl ester and 2,2'-oxamidobis[ethyl-3-(3,5-di-t-butyl-4-hydroxyphenyl)]propionate, fatty acid metal salts such as zinc stearate, calcium stearate and calcium 12-hydroxystearate, and fatty acid esters of polyhydric alcohol such as glycerin monostearate, glycerin monolaurate, glycerin distearate, pentaerythritol monostearate, pentaerythritol distearate and pentaerythritol tristearate. These stabilizers may be used singly, but may also be used in combination, for example, a combination use of tetrakis[methylene 3-(3,5-di-t-butyl-4-hydroxyphenyl)-propionate]methane with zinc stearate and glycerin monostearate.

In the present invention, it is desirable to use phenolic antioxidants in combination with fatty acid esters of polyhydric alcohol, said fatty acid esters being preferably those of polyhydric alcohol exhibiting an alcoholic functionality of at least three, in which part of the hydroxy groups has been esterified.

Such fatty acid esters of polyhydric alcohol as mentioned above include concretely fatty acid esters of glycerin such as glycerin monostearate, glycerin monolaurate, glycerin monomyristate, glycerin monopalmitate, glycerin distearate and glycerin dilaurate, and fatty acid esters of pentaerythritol such as pentaerythritol monostearate, pentaerythritol monolaurate, pentaerythritol dilaurate, pentaerythritol distearate and pentaerythritol tristearate.

Such phenolic antioxidants are used in an amount, based on 100 parts by weight of the above-mentioned components [A] and [B] in total, of 0 to 10 parts by weight, preferably 0 to 5 parts by weight, more preferably 0 to 2 parts by weight. Such fatty acid esters of polyhydric alcohol are used in an amount, based on 100 parts by weight of the components [A] and [B] in total, of 0 to 10 parts by weight, preferably 0 to 5 parts by weight.

The substrates of the magnetooptical recording media of the invention may be incorporated with fillers such as silica, diatomaceous earth, alumina, titanium oxide, magnesium oxide, pumice, pumice balloons, aluminum hydroxide, magnesium hydroxide, basic magnesium carbonate, dolomite, calcium sulfate, potassium titanate, barium sulfate, calcium sulfite, talc, clay, mica, asbestos, glass fibers, glass flakes, glass beads, calcium silicate, montmorillonite, bentonite, graphite, aluminum powder, molybdenum sulfide, boron fibers, silicon carbide fibers, polyethylene fibers, polypropylene fibers, polyester fibers and polyamide fibers.

In addition, a substrate comprising the cycloolefin random copolymer or the copolymer-containing composition has excellent adhesion to protective film, and accordingly the recording film is excellent in long-term stability and, at the same time, is effectively prevented from oxidation. The magnetooptical recording media prepared by forming a recording film and a protective film on a substrate composed of the cycloolefin random copolymer are therefore excellent in recording sensitivity, durability and long-term stability. Further, the magnetooptical recording media of the invention have no warpage, and they are free from cracking.

Though the thickness of the substrate 1 is not limited particularly, the substrate preferably has a thickness of 0.5-5 mm, particularly preferably 1-2 mm.

Protective film 2, 2a, 2b

The protective film 2 or 2a used in the first to fourth magnetooptical recording media of the invention is a film represented by the chemical formula $SiN_x$, ZnS, ZnSe, CdS, Si, AlN, etc., and of these films, particularly preferred is the $SiN_x$ film.

Of protective films represented by the formula $SiN_x$, those having x in the range $0 < x \leqq 4/3$ are preferable, and particularly preferable concrete examples of the protective film include a silicon nitride film having the formula of $Si_3N_4$, etc., or a film containing a mixture of $Si_3N_4$ and Si so that x is in the range $0 < x < 4/3$. Such protective films as represented by the formula $SiN_x$ can be formed by sputtering a $Si_3N_4$

target, or a $N_2$ gas and a Si target. Such protective films 2 or 2a composed of $SiN_x$ as described above preferably have a refractive index of not less than 2.0. The protective film 2 or 2a may protect the magnetooptical recording film 3 described later from oxidation, etc., or it may act as an enhancement film to increase recording characteristics of the magnetooptical recording film, or it may function both ways. Moreover, the protective films having the chemical formula of $SiN_x$ ($0 < x \leq 4/3$) are particularly excellent in crack resistance.

In the present invention, the protective film 2 or 2a has a thickness of 500 to 2000 Å, preferably about 800 to 1500 Å.

A magnetooptical recording medium having a good C/N ratio and a broad margin can be obtained by forming a protective film having a thickness as defined above.

In the third and fourth magnetooptical recording media of the invention, the protective film 2b is formed on the magnetooptical recording film 3 described later.

As the protective film 2b, a film similar to the protective film 2a is used.

The protective film 2b as described above has a thickness of 100 to 1000 Å, preferably about 150 to 500 Å.

In the present invention, a magnetooptical recording medium having a better C/N ratio and a broader recording power margin may sometimes be obtained by making the thickness of the protective film in the above-mentioned range.

<u>Magnetooptical recording film 3</u>

The magnetooptical recording films 3 comprise (i) at least one metal selected from 3d transition metals and (iii) at least one element selected from rare earth elements, or (i) at least one metal selected from 3d transition metals, (ii) at least one metal selected from corrosion-resistant metals and (iii) at least one element selected from rare earth elements.

Of the magnetooptical recording films mentioned above, preferable is the one comprising (i) at least one metal selected from 3d transition metals, (ii) at least one metal selected from corrosion-resistant metals and (iii) at least one element selected from rare earth elements.

Useful as the 3d transition metals (i) are Fe, Co, Ti, V, Cr, Mn, Ni, Cu and Zn, and among these, preferred is Fe or Co, or both of them.

This 3d transition metal is contained in the magnetooptical recording film 3 in an amount of 20-90 atom%, preferably 30-85 atom% and especially 35-80 atom%.

By incorporating the corrosion resistant metal (ii) in the magnetooptical recording film, oxidation resistance of said recording film can be enhanced. Useful corrosion-resistant metals are Pt, Pd, Ti, Zr, Ta and Nb, and among these, preferred are Pt, Pd and Ti, and particularly preferred is Pt or Pd, or both of them.

In the magnetooptical recording film 3, the corrosion-resistant metal is present in an amount of not more than 30 atom%, preferably 5-25 atom%, more preferably 10-25 atom%, especially 10-20 atom%.

Included in the group of rare earth element (iii) mentioned above are Gd, Tb, Dy, Ho, Er, Tm, Yb, Lu, La, Ce, Pr, Nd, Pm, Sm and Eu. Of these elements, particularly preferred are Gd, Tb, Dy, Ho, Nd, Sm and Pr.

At least one element selected from the above-mentioned rare earth element is present in the magnetooptical recording film in an amount of 5-50 atom%, preferably 8-45 atom% and especially 10-40 atom%.

In the present invention, the magnetooptical recording film desirably has the following composition.

<u>(i) 3d transition metal</u>

The magnetooptical recording films used in the present invention contain desirably Fe or Co, or both of them as the 3d transition metal (i), and the content of Fe and/or Co in the recording film is at least 40 atom% but not more than 80 atom%, preferably at least 40 atom% but less than 75 atom% and especially at least 40 atom% but not more than 59 atom%.

In the magnetooptical recording film, Fe and/or Co is present desirably in such an amount that Co/(Fe+Co) ratio (atomic ratio) is at least 0 but not more than 0.3, preferably at least 0 but not more than 0.2 and especially at least 0.01 but not more than 0.2.

When the amount of Fe and/or Co used in the magnetooptical recording film is in the range of at least 40 atom% but not more than 80 atom%, there are obtained such advantages that the resulting magnetooptical recording film is excellent in oxidation resistance and has a magnetic easy axis perpendicular to the

film.

When Co is incorporated into the magnetooptical recording film, there are observed such phenomena that (i) Curie point increases and (ii) Kerr rotation angle ($\theta k$) becomes larger in the thus incorporated recording film, with the result that recording sensitivity can be controlled by adjustment of the amount of Co to be incorporated and, moreover, carrier level of reproducing signals can be increased by the incorporation of Co. From the viewpoint of noise level and C/N ratio, Co/(Fe + Co) ratio (atomic ratio) in the magnetooptical recording film is at least 0 but not more than 0.3, preferably at least 0 but not more than 0.2 and especially at least 0.01 but not more than 0.2.

The magnetooptical recording films used in the present invention as illustrated above will not be subject to change of properties even when they are used repeatedly in recording and erasing information. For example, in the magnetooptical recording film of the present invention having the composition of $Pt_{13}Tb_{28}Fe_{50}Co_9$ (atom%), no decrease in C/N ratio is observed even when the recording and erasing of information are carried out repeatedly 100,000 times.

(ii) Corrosion-resistant metal

The magnetooptical recording films of the present invention preferably contain, as the corrosion-resistant metal (ii), Pt or Pd, or both of them, and Pt and/or Pd is desirably present in the magnetooptical recording film in an amount of 5-30 atom%, preferably exceeding 10 atom% but not more than 30 atom%, especially exceeding 10 atom% but less than 20 atom% and most suitably at least 11 atom% but not more than 19 atom%.

When the amount of Pt and/or Pd contained in the magnetooptical recording film is at least 5 atom%, especially in excess of 10 atom%, there are obtained such advantages that the resulting recording film is excellent in oxidation resistance, wherein no corrosion occurs even when the recording film is used for a long period of time and no deteriorative change in C/N ratio is observed.

For example, in the magnetooptical recording film of the present invention having the composition of $Pt_{13}Tb_{28}Fe_{50}Co_9$ (atom%) or $Pd_{12}Tb_{28}Fe_{53}Co_7$ (atom%), no change in C/N ratio is observed at all even when the recording film is held for 1000 hours under the circumstances of relative humidity of 85% RH and 80 °C. In contrast to the magnetooptical recording film mentioned above, in the magnetooptical recording film containing no Pt or Pd and having a composition represented by the formula $Tb_{25}Fe_{68}Co_7$ (atom%), a marked decrease in C/N ratio is observed when the recording film is held for 1000 hours under the circumstances of relative humidity of 85% RH and 80 °C.

When information is recorded in, or the recorded information is read out from, the magnetooptical recording film containing Pt and/or Pd in an amount as defined above, a sufficiently high C/N ratio is obtained with a small bias magnetic field applied. If a sufficiently high C/N ratio is obtained with a small bias magnetic field, a simplified driving device can be used for driving an optical disc having a magnetooptical recording film, because a magnet for generating bias magnetic field can be minimized in size and, moreover, development of heat from the magnet can be reduced. Since a sufficiently high C/N ratio is obtained with a small bias, it becomes easy to design a magnet for magnetic field modulation recording capable of overwriting.

(iii) Rare earth element (RE)

In the magnetooptical recording films of the present invention, a rare earth element (RE) is contained, and the rare earth element used includes Nd, Sm, Pr, Ce, Eu, Gd, Tb, Dy or Ho.

Of the rare earth elements as exemplified above, preferably used are Nd, Pr, Gd, Tb and Dy, and particularly preferred is Tb. These rare earth elements may be used in a combination of two or more elements, and in this case the content of Tb out of the elements used is desirably at least 50 atom%.

From the point of view of obtaining a magnetooptical recording film with a magnetization with easy axis perpendicular to the film, it is desirable that the rare earth elements are present in the magnetooptical recording film in such an amount that RE/(RE + Fe + Co) ratio (atomic ratio) represented by x is $0.15 \leq x \leq 0.45$, preferably $0.20 \leq x \leq 0.4$.

In the present invention, it is also possible to contemplate improvements in Curie temperature, compensation temperature, coercive force Hc or Kerr rotation angle $\theta k$, or reduction of the cost of production by adding small amounts of various other elements to the magnetooptical recording films. The amounts of these elements contained in the magnetooptical recording film are less than 10 atom% based on all atoms constituting the recording film.

Such other elements as may be useful in that case include those mentioned below.

(I) 3d transition elements other than Fe and Co, for example, including concretely Sc, Ti, V, Cr, Mn, Ni, Cu and Zn.

Of these elements as exemplified above, preferably used are Ti, Ni, Cu and Zn.

(II) 4d transition elements other than Pd, for example, including concretely Y, Zr, Nb, Mo, Tc, Ru, Rh, Ag and Cd.

Of these elements as exemplified above, preferably used are Zn and Nb.

(III) 5d transition elements other than Pt, for example, including concretely Hf, Ta, W, Re, Os, Ir, Au and Hg.

Of these elements as exemplified above, preferably used is Ta.

(IV) Elements belonging to Group III B

Useful elements are concretely B, Al, Ga, In and Tl.

Of these elements as exemplified above, preferably used are B, Al and Ga.

(V) Elements belonging to Group IV B

Useful elements are concretely C, Si, Ge, Sn and Pb.

Of these elements as exemplified above, preferably used are Si, Ge, Sn and Pb.

(VI) Elements belonging to Group V B

Useful elements are concretely N, P, As, Sb and Bi.

Of these elements as exemplified above, preferably used is Sb.

(VII) Elements belonging to Group VI B

Useful elements are concretely S, Se, Te and Po.

Of these elements as exemplified above, preferably used is Te.

By way of wide angle X-ray diffractiometry or the like, it is confirmed that the magnetooptical recording film 3 having the composition as defined above is an amorphous film which has a magnetic easy axis perpendicular to the film, Kerr hysteresis loop of which exhibits in most cases favorable square shape, and which is capable of vertical magnetic and magnetooptical recording.

In the present specification, the expression used to the effect that Kerr hysteresis loop exhibits favorable square shape is intended to mean the fact that a ratio $\theta k_2/\theta k_1$ of the Kerr rotation angle at a saturation magnetization ($\theta k_1$) in the maximum external magnetic field to the Kerr rotation angle at a remnant magnetization ($\theta k_2$) in the magnetic field of zero is more than 0.8.

This magnetooptical recording film 3 has a film thickness of 100-600 Å, preferably 100-400 Å and especially 150-300 Å or thereabouts.

<u>Aluminum alloy film 4</u>

In the first magnetooptical recording medium 10a of the invention, the aluminum alloy film 4 is formed on the magnetooptical recording film 3 as described above.

In the second magnetooptical recording medium 10b of the invention, the nickel film 5 described below is formed on the magnetooptical recording film 3 as described above, and the aluminum alloy film 4 is formed on the nickel alloy film 5.

In the third magnetooptical recording medium 10c of the invention, the protective film 2b as described above is formed on the magnetooptical recording film 3 as described above, and the aluminum alloy film 4 is formed on the protective film 2b.

In the fourth magnetooptical recording medium 10d of the invention, the protective film 2b as described above is formed on the magnetooptical recording film 3 as described above, the nickel alloy film 5 described later is formed on the protective film 2b, and the aluminum alloy film 4 is formed on the nickel alloy film 5.

The aluminum alloy film 4 comprises aluminum and at least one element other than aluminum.

Concrete examples of such aluminum alloy include those enumerated below.

Al-Cr alloy (Cr content 0.1-10 atom%),
Al-Cu alloy (Cu content 0.1-10 atom%),
Al-Mn alloy (Mn content 0.1-10 atom%),
Al-Hf alloy (Hf content 0.1-10 atom%),
Al-Nb alloy (Nb content 0.1-10 atom%),
Al-B alloy (B content 0.1-10 atom%),
Al-Ti alloy (Ti content 0.1-10 atom%),
Al-Ti-Nb alloy (Ti content 0.1-5 atom%, Nb content 0.1-5 atom%),
Al-Ti-Hf alloy (Ti content 0.1-5 atom%, Hf content 0.1-10 atom%),
Al-Cr-Hf alloy (Cr content 0.1-5 atom%, Hf content 0.1-10 atom%),

Al-Cr-Ti alloy (Cr content 0.1-5 atom%, Ti content 0.1-10 atom%),
Al-Cr-Zr alloy (Cr content 0.1-5 atom%, Zr content 0.1-10 atom%),
Al-Ti-Nb alloy (Ti content 0.1-5 atom%, Nb content 0.1-5 atom%),
Al-Ni alloy (Ni content 0.1-10 atom%),
Al-Mg alloy (Mg content 0.1-10 atom%),
Al-Mg-Ti alloy (Mg content 0.1-10 atom%, Ti content 0.1-10 atom%),
Al-Mg-Cr alloy (Mg content 0.1-10 atom%, Cr content 0.1-10 atom%),
Al-Mg-Hf alloy (Mg content 0.1-10 atom%, Hf content 0.1-10 atom%),
Al-Se alloy (Se content 0.1-10 atom%),
Al-Zr alloy (Zr content 0.1-10 atom%),
Al-Ta alloy (Ta content 0.1-10 atom%),
Al-Ta-Hf alloy (Ta content 0.1-10 atom%, Hf content 0.1-10 atom%),
Al-Si alloy (Si content 0.1-10 atom%),
Al-Ag alloy (Ag content 0.1-10 atom%),
Al-Pd alloy (Pd content 0.1-10 atom%), and
Al-Pt alloy (Pt content 0.1-10 atom%).

Of the aluminum alloys as exemplified above, those mentioned below are particularly preferred, because they are excellent in corrosion resistance. And the magnetooptical recording media having the metallic film composed of the aluminum alloys are small in dependence on linear velocity.

Aluminum alloys containing 0.1-10 atom% of hafnium,

Aluminum alloys containing 0.1-10 atom% of niobium,

Aluminum alloys containing 0.5-5 atom% of titanium and 0.5-5 atom% of hafnium, the combined content of said titanium and hafnium being 1-5.5 atom%,

Aluminum alloys containing 0.1-5 atom% of chromium and 0.1-9.5 atom% of titanium, the combined content of said chromium and titanium being not more than 10 atom%,

Aluminum alloys containing 0.1-5 atom% of chromium, 0.1-9.5 atom% of titanium and 0.1-9.5 atom% of hafnium, the combined content of said chromium, titanium and hafnium being not more than 10 atom%.

Aluminum alloys containing 0.1-10 atom% of magnesium and 0.1-10 atom% of chromium, the combined content of said magnesium and chromium being not more than 15 atom%,

Aluminum alloys containing 0.1-5 atom% of chromium and 0.1-9.5 atom% of hafnium, the combined content of said chromium and hafnium being not more than 10 atom%,

Aluminum alloys containing 0.1-10 atom% of magnesium and 0.1-10 atom% of hafnium, the combined content of said magnesium and hafnium being not more than 15 atom%,

Aluminum alloys containing 0.1-5 atom% of chromium and 0.1-9.5 atom% of zirconium, the combined content of said chromium and zirconium being not more than 10 atom%,

Aluminum alloys containing 0.1-10 atom% of tantalum and 0.1-10 atom% of hafnium, the combined content of said tantalum and hafnium being not more than 15 atom%,

Aluminum alloys containing 0.5-5 atom% of titanium and 0.5-5 atom% of niobium, the combined content of said titanium and niobium being 1-5.5 atom%,

Aluminum alloys containing 0.1-10 atom% of magnesium and 0.1-10 atom% of titanium, the combined content of said magnesium and titanium being not more than 15 atom%.

Aluminum alloys containing 0.1-10 atom% of magnesium, 0.1-10 atom% of hafnium and 0.1-10 atom% of titanium, the combined content of said magnesium, hafnium and titanium being not more than 15 atom%.

Aluminum alloys containing 0.1-10 atom% of magnesium, 0.1-10 atom% of hafnium and not more than 10 atom% of chromium, the combined content of magnesium, hafnium and chromium being not more than 15 atom%.

Aluminum alloys containing 0.1-10 atom% of magnesium, 0.1-10 atom% of titanium and not more than 10 atom% of chromium, the combined content of magnesium, titanium and chromium being not more than 15 atom%, and

Aluminum alloys containing 0.1-10 atom% of magnesium, 0.1-10 atom% of hafnium, 0.1-10 atom% of titanium and not more than 10 atom% of chromium, the combined content of magnesium, hafnium, titanium and chromium being not more than 15 atom%.

The above-mentioned aluminum alloy film may contain one or two or more metals (elements) in addition to metals constituting the aluminum alloy film. Such metals may include, for example, titanium (Ti), chromium (Cr), silicon (Si), tantalum (Ta), copper (Cu), tungsten (W), zirconium (Zr), manganese (Mn), magnesium (Mg) and vanadium (V), and the amount of these metals to be contained is usually not more than 5 atom%, preferably not more than 2 atom%. (Wherein, aluminum alloy film which has already contained the metals (elements) exemplified above does not further contain said metals (elements) which

have already been contained in the aluminum alloy film in the range as defined above. For example, when the aluminum alloy constituting the aluminum alloy film is Al-Ti alloy or Al-Ti-Hf alloy, no titanium (Ti) out of the above-exemplified metals (elements) is contained in this aluminum alloy.)

The aluminum alloy film 4 used in the present invention desirably has a film thickness of 100-5000 Å, preferably 500-3000 Å and especially 700-2000 Å.

The aluminum alloy film 4 used in the present invention functions as a good heat conductor layer, and by the presence of this aluminum alloy film in the magnetooptical recording medium, the center portion of pits recorded in the recording film is prevented from excessive heating by the recording beam applied thereto and, as the result it is considered that dependence on linear velocity of the recording power used is made small.

The aluminum alloy film of the invention is excellent in corrosion resistance. Accordingly, the recording media have the characteristics that they show little dependence on linear velocity after using the media for a long period, and the aluminum alloy film shows an excellent protective action on the recording layer.

Nickel alloy film 5

In the first magnetooptical recording medium 10a of the invention, the nickel alloy film 5 is formed on the aluminum alloy film 4 as described above.

In the second magnetooptical recording medium 10b of the invention, the nickel alloy film 5 is formed on the magnetooptical recording film 3 as described above, and the aluminum alloy film 4 described above is formed on the nickel alloy film 5.

In the third magnetooptical recording medium 10c of the invention, the nickel alloy film 5 is formed on the aluminum alloy film 4 as described above.

In the fourth magnetooptical recording medium 10d of the invention, the protective film 2b described above is formed on the magnetooptical recording film 3 as described above, the nickel alloy film 5 is formed on the protective film 2b, and the aluminum alloy film 4 described above is formed on the nickel alloy film 5.

The nickel alloy film 5 comprises nickel and at least one element other than nickel.

Concrete examples of such a nickel alloy include

Ni-Cr alloy (e.g., 30-99 atom% of Ni and 1-70 atom% of Cr, particularly preferably 70-95 atom% of Ni and 5-30 atom% of Cr),

Ni-Si alloy (e.g., 85 atom% of Ni, 10 atom% of Si, 3 atom% of Cu and 2 atom% of Al),

Ni-Cu alloy (e.g., 63 atom% of Ni, 29-30 atom% of Cu, 0.9-2 atom% of Fe, 0.1-4 atom% of Si and 0-2.75 atom% of Al),

Ni-Mo-Fe alloy (e.g., 60-65 atom% of Ni, 25-35 atom% of Mo and 5 atom% of Fe),

Ni-Mo-Fe-Cr alloy (e.g., 55-60 atom% of Ni, 15-20 atom% of Mo, 6 atom% of Fe, 12-16 atom% of Cr and 5 atom% of W),

Ni-Mo-Fe-Cr-Cu alloy (e.g., 60 atom% of Ni, 5 atom% of Mo, 8 atom% of Fe, 21 atom% of Cr, 3 atom% of Cu, 1 atom% of Si, 1 atom% of Mn and 1 atom% of W, or 44-47 atom% of Ni, 5.5-7.5 atom% of Mo, 21-23 atom% of Cr, 0.15 atom% of Cu, 1 atom% of Si, 1-2 atom% of Mn, 2.5 atom% of Co, 1 atom% of W, 1.7-2.5 atom% of Nb and the balance Fe),

Ni-Cr-Cu-Mo alloy (e.g., 56-57 atom% of Ni, 23-24 atom% of Cr, 8 atom% of Cu, 4 atom% of Mo, 2 atom% of W and 1 atom% of Si or Mn), and

Ni-Cr-Fe alloy (e.g., 79.5 atom% of Ni, 13 atom% of Cu, 6.5 atom% of Fe and 0.2 atom% of Cu, or 30-34 atom% of Ni, 19-22 atom% of Cr, 0.5 atom% of Cu, 1 atom% of Si, 1.5 atom% of Mn and the balance Fe).

Of these alloys for the nickel alloy film 5, particularly preferred is Ni-Cr alloy.

Such a nickel alloy film 5 has a thickness of 200-5000 Å, preferably 300-3000 Å, more preferably about 500-2000 Å.

The magnetooptical recording media of the invention having a nickel alloy film 5 as described above have excellent mechanical characteristics such as little warpage formation.

In the magnetooptical recording media of the invention, a protective film may be provided between the aluminum alloy film 4 and the nickel alloy film 5 as described above. A protective film similar to those protective films 2a, 2b described above may be used.

In the present invention, an overcoat layer may be provided on the most external layer, that is, the nickel alloy film or the aluminum alloy film. An UV-ray polymerization resin, for example, an acryl type UV-ray polymerization resin is used as an overcoating agent, and the resultant coating has a thickness of usually 1 to 100 µm. The substrate may also have a top coat on the side opposite to the protective film.

The magnetooptical recording media 10 of the invention is manufactured by forming, on the substrate, the protective film, the magnetooptical recording film, the aluminum alloy film and the nickel alloy film, for example, by vacuum vapor deposition, sputtering or electron beam vapor deposition.

## EFFECT OF THE INVENTION

The magnetooptical recording media according to the present invention have excellent mechanical characteristics such as little warpage (tilt) formation, little dependence of the recording power on linear velocity, a broad recording power margin, excellent erase-read-write cyclability, and in addition excellent oxidation resistance and recording sensitivity.

## EXAMPLE

The present invention is illustrated below with reference to examples, but it should be construed that the invention is in no way limited to those examples.

### Example 1

A protective film composed of $Si_3N_4$ having a thickness of 1100 Å and a magnetooptical recording film composed of $Pt_{10}Tb_{28}Fe_{60}Co_2$ (atom%) having a thickness of 300 Å were successively formed by sputtering on a substrate composed of an amorphous copolymer of ethylene and tetracyclo[4.4.0.$1^{2,5}$.$1^{7,10}$]-3-dodecene (structural formula:

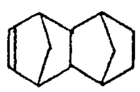 ,

abbreviated to TCD-3 hereinafter), said copolymer having an ethylene content of 59 mol% as measured by $^{13}$C-NMR analysis, a TCD-3 content of 41 mol%, an intrinsic viscosity [$\eta$] of 0.42 dl/g as measured in decalin at 135° C, a softening temperature (TMA) of 154° C. On the recording film was formed an aluminum alloy layer composed of an aluminum-titanium-hafnium alloy having a thickness of 2000 Å by sputtering method using an aluminum-titanium-hafnium composite target. The aluminum alloy layer thus obtained contained 97 atom% of aluminum, 1 atom% of titanium and 2 atom% of hafnium. A nickel alloy layer composed of a nickel-chromium alloy having a thickness of 500 Å was formed on the aluminum alloy layer by sputtering method using a nickel-chromium composite target. The nickel alloy layer thus obtained contained 90 atom% of nickel and 10 atom% of chromium.

The thus obtained magnetooptical recording medium was held in an atmosphere at 70° C and a relative humidity of 85% for 48 hours, and no warpage (tilt) change of the recording medium was observed compared with the substrate before formation of the films.

Moreover, the magnetooptical recording medium showed an optimum recording power of 4.1 mW at a linear velocity of 5.7 m/sec and optimum recording power of 6.5 mW at a linear velocity of 11.3 m/sec.

The term "power margin" signifies the range of recording power at which a C/N ratio of not less than C/N max-3 dB can be obtained. The magnetooptical recording medium showed a power margin (Pm) of 3.6 mW and a C/N ratio of 47.7 dB at a frequency of 3.7 MHz, a duty factor of 33.3% and a linear velocity of 5.7 m/sec.

Furthermore, in the specification of the invention, an optimum recording power signifies the recording power which makes minimum the secondary harmonics of the reproduced signal when the write signal has a frequency of 1 MHz and a duty factor of 50%. The optimum recording power less depends on the linear velocity when the difference of the optimum recording power between linear velocities is small.

### Example 2

A protective film composed of $Si_3N_4$ having a thickness of 1000 Å and a magnetooptical recording film composed of $Pt_{10}Tb_{28}Fe_{60}Co_2$ (atom%) having a thickness of 300 Å were successively formed by sputtering on a substrate similar to the one used in Example 1. On the recording film was formed a nickel alloy layer composed of a nickel-chromium alloy having a thickness of 500 Å by sputtering method using a nickel-chromium composite target. The nickel alloy layer thus obtained contained 90 atom% of nickel and 10 atom% of chromium. On the nickel alloy layer was further formed an aluminum alloy layer composed of

an aluminum-titanium-hafnium alloy having a thickness of 1000 Å by sputtering method using an aluminum-titanium-hafnium composite target. The aluminum alloy layer thus obtained contained 97 atom% of aluminum, 1 atom% of titanium and 2 atom% of hafnium.

The thus obtained magnetooptical recording medium was held in an atmosphere at 70° C and a relative humidity of 85% for 48 hours, and no warpage (tilt) change of the recording medium was observed compared with the substrate before formation of the films.

Moreover, the magnetooptical recording medium showed an optimum recording power of 4.6 mW at a linear velocity of 5.7 m/sec and 6.8 mW at a linear velocity of 11.3 m/sec.

The magnetooptical recording medium showed a power margin (Pm) of 3.3 mW and a C/N ratio of 47.5 dB at a frequency of 3.7 MHz, a duty factor of 33.3% and a linear velocity of 5.7 m/sec.

Example 3

A protective film composed of $Si_3N_4$ having a thickness of 1100 Å and a magnetooptical recording film composed of $Pt_{10}Tb_{28}Fe_{60}Co_2$ (atom%) having a thickness of 300 Å were successively formed by sputtering on a substrate similar to the one used in Example 1. A protective layer composed of $Si_3N_4$ having a thickness of 250 Å was further formed. An aluminum alloy layer composed an aluminum-titanium-hafnium alloy having a thickness of 2000 Å was formed on the protective layer by sputtering method using an aluminum-titanium-hafnium composite target. The aluminum alloy layer thus obtained contained 97 atom% of aluminum, 1 atom% of titanium and 2 atom% of hafnium. A nickel alloy layer composed of a nickel-chromium alloy having a thickness of 1000 Å was further formed on the aluminum alloy layer by sputtering method using a nickel-chromium composite target. The nickel alloy layer thus obtained contained 90 atom% of nickel and 10 atom% of chromium.

The thus obtained magnetooptical recording medium was held in an atmosphere at 70° C and a relative humidity of 85% for 48 hours, and no warpage (tilt) change of the recording medium was observed compared with the substrate before formation of the films.

Moreover, the magnetooptical recording medium showed an optimum recording power of 4.3 mW at a linear velocity of 5.7 m/sec and 6.0 mW at a linear velocity of 11.3 m/sec when the frequency and duty factor were 1 MHz and 50%, respectively.

The magnetooptical recording medium also showed a power margin (Pm) of 4.5 mW and a C/N ratio of 48.0 dB at a frequency of 3.7 MHz, a duty factor of 33.3% and a linear velocity of 5.7 m/sec.

**Claims**

**1.** A magnetooptical recording medium characterized in that a protective film, a magnetooptical recording film, an aluminum alloy film and a nickel alloy film are formed on a substrate in that order.

**2.** A magnetooptical recording medium characterized in that a protective film, a magnetooptical recording film, a nickel alloy film and an aluminum alloy film are formed on a substrate in that order.

**3.** A magnetooptical recording medium characterized in that a protective film, a magnetooptical recording film, a protective film, an aluminum alloy film and a nickel alloy film are formed on a substrate in that order.

**4.** A magnetooptical recording medium characterized in that a protective film, a magnetooptical recording film, a protective film, a nickel alloy film and an aluminum alloy film are formed on a substrate in that order.

**5.** The magnetooptical recording medium as claimed in Claim 1, 2, 3 or 4, wherein the substrate comprises a copolymer of ethylene and a cycloolefin represented by the general formula [I] or [II]

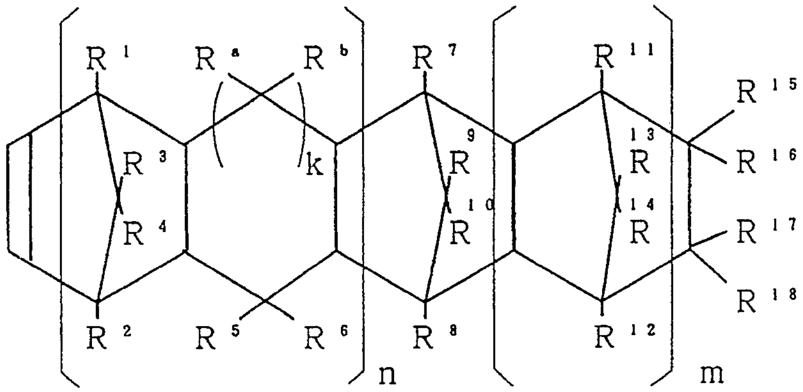

... [ I ]

wherein n is 0 or 1, m is 0 or a positive integer, k is 0 or 1, $R^1$ - $R^{18}$, $R^a$ and $R^b$ are individually hydrogen, halogen or a hydrocarbon group, $R^{15}$ - $R^{18}$ may, linking together, form a mono- or polycyclic ring which may have a double bond, and $R^{15}$ together with $R^{16}$ or $R^{17}$ together with $R^{18}$ may form an alkylidene group;

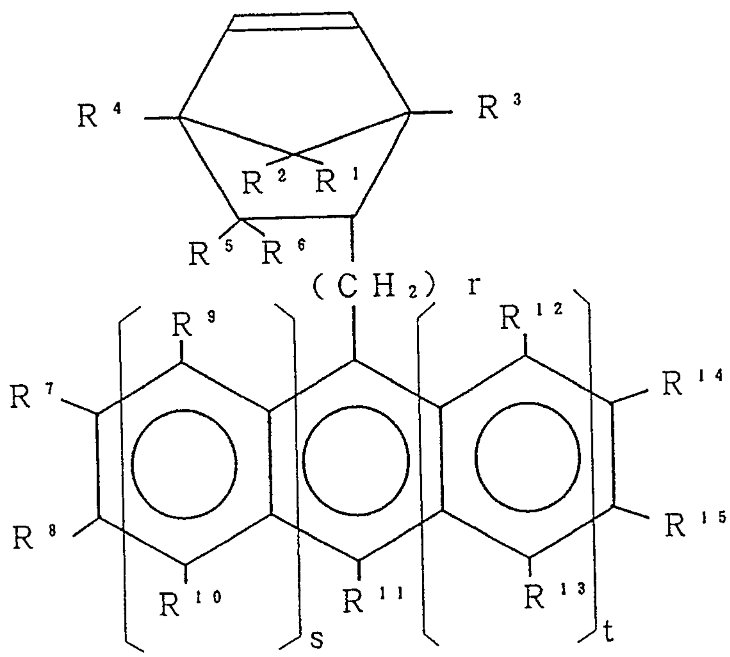

... [II]

wherein r is 0 or an integer of at least 1, s and t are each 0, 1 or 2, $R^1$-$R^{15}$ are individually an atom or a group selected from the group consisting of hydrogen, halogen, an aliphatic hydrocarbon group, an aromatic hydrocarbon group and an alkoxy group, and $R^5$ (or $R^6$) and $R^9$ (or $R^7$) may be linked together through an alkylene group of 1-3 carbon atoms or may be linked together directly without through any group.

**6.** The magnetooptical recording medium as claimed in Claim 1, 2, 3 or 4 wherein the substrate comprises

a cycloolefin random copolymer [A] of ethylene and a cycloolefin represented by the general formula [I] or [II], said random copolymer having a softening temperature (TMA) of not lower than 70° C and an intrinsic viscosity [η] of 0.05-10 dl/g as measured in decalin at 135° C;

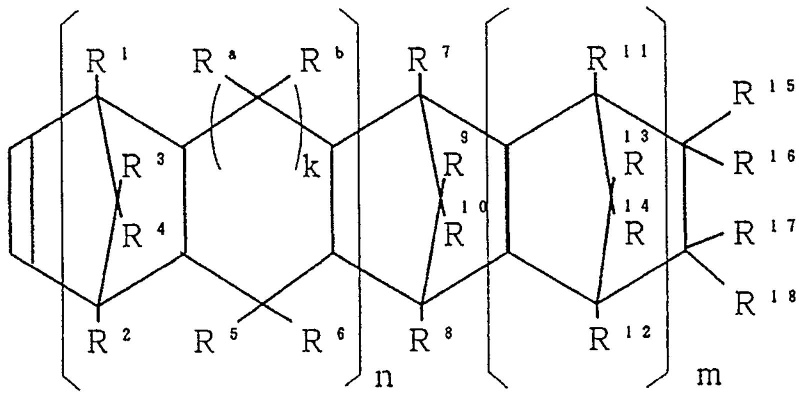

... [ I ]

wherein n is 0 or 1, m is 0 or a positive integer, k is 0 or 1, $R^1$ - $R^{18}$, $R^a$ and $R^b$ are individually hydrogen, halogen or a hydrocarbon group, $R^{15}$ - $R^{18}$ may, linking together, form a mono- or polycyclic ring which may have a double bond, and $R^{15}$ together with $R^{16}$ or $R^{17}$ together with $R^{18}$ may form an alkylidene group;

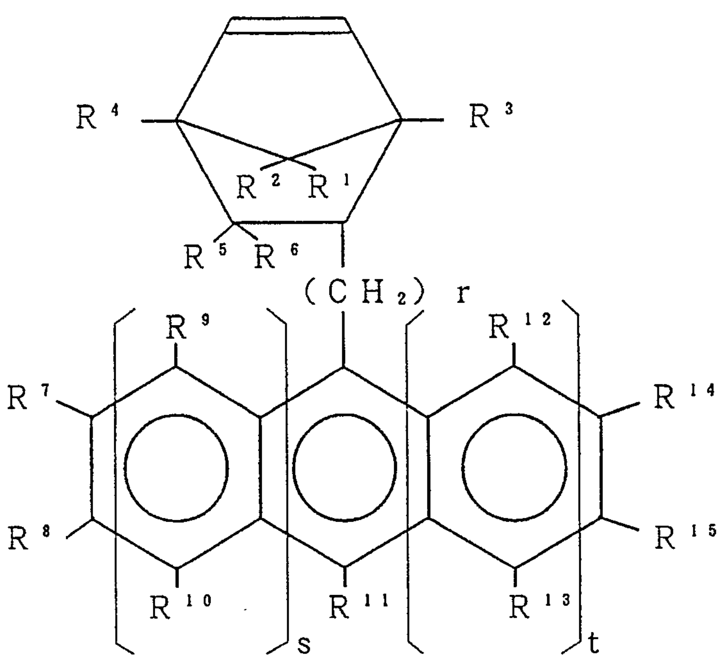

... [II]

wherein r is 0 or an integer of at least 1, s and t are each 0, 1 or 2, $R^1$-$R^{15}$ are individually an atom or a group selected from the group consisting of hydrogen, halogen, an aliphatic hydrocarbon group, an aromatic hydrocarbon group and an alkoxy group, and $R^5$ (or $R^6$) and $R^9$ (or $R^7$) may be linked together through an alkylene group of 1-3 carbon atoms or may be linked together directly without through any group.

**7.** The magnetooptical recording medium as claimed in Claim 1, 2, 3 or 4 wherein the substrate comprises

a cycloolefin random copolymer [A] of ethylene and a cycloolefin represented by the general formula [I] or [II], said random copolymer having a softening temperature (TMA) of not lower than 70°C and an intrinsic viscosity [$\eta$] of 0.05-10 dl/g as measured in decalin at 135°C, and

a cycloolefin random copolymer [B] of ethylene and a cycloolefin represented by the general formula [I] or [II], said copolymer having a softening temperature (TMA) of lower than 70°C and an intrinsic viscosity [$\eta$] of 0.05-10 dl/g as measured in decalin at 135°C, a (said cycloolefin random copolymer [A])/(said cycloolfin random copolymer [B]) weight ratio being 100/0.1-100/10

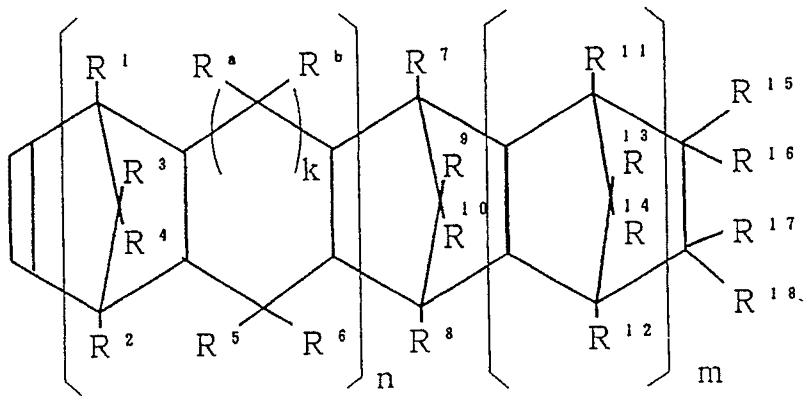

... [ I ]

wherein n is 0 or 1, m is 0 or a positive integer, k is 0 or 1, $R^1$ - $R^{18}$, $R^a$ and $R^b$ are individually hydrogen, halogen or a hydrocarbon group, $R^{15}$ - $R^{18}$ may, linking together, form a mono- or polycyclic ring which may have a double bond, and $R^{15}$ together with $R^{16}$ or $R^{17}$ together with $R^{18}$ may form an alkylidene group;

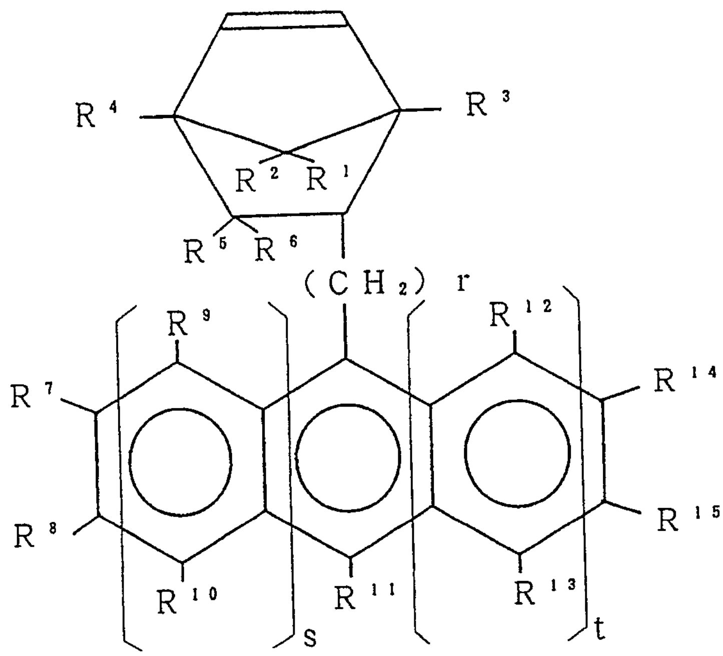

... [II]

wherein r is 0 or an integer of at least 1, s and t are each 0, 1 or 2, $R^1$-$R^{15}$ are individually an atom or a group selected from the group consisting of hydrogen, halogen, an aliphatic hydrocarbon group, an aromatic hydrocarbon group and an alkoxy group, and $R^5$ (or $R^6$) and $R^9$ (or $R^7$) may be linked together through an alkylene group of 1-3 carbon atoms or may be linked together directly without through any group.

**8.** The magnetooptical recording medium as claimed in Claim 1, 2, 3 or 4 wherein the protective film is composed of one member selected from the group consisting of $SiN_x$ ($0 < x \leqq 4/3$), ZnS, ZnSe, CdS, Si and AlN.

**9.** The magnetooptical recording medium as claimed in Claim 1, 2, 3 or 4 wherein the protective film is composed of $SiN_x$ ($0 < x \leqq 4/3$).

**10.** The magnetooptical recording medium as claimed in Claim 1, 2, 3 or 4 wherein the magnetooptical recording film is composed of (i) at least one metal selected from 3 d transition metals and (iii) at least

one element selected from rare earth elements.

**11.** The magnetooptical recording medium as claimed in Claim 1, 2, 3 or 4 wherein the magnetooptical recording film is composed of (i) at least one metal selected from 3 d transition metals, (ii) at least one metal selected from corrosion-resistant metals and (iii) at least one element selected from rare earth elements.

**12.** The magnetooptical recording medium as claimed in Claim 1, 2, 3 or 4 wherein the aluminum alloy film is composed of an alloy comprising aluminum and at least one element selected from the group consisting of chromium, copper, manganese, hafnium, niobium, boron, titanium, nickel, magnesium, selenium, zirconium, tantalum, silicon, silver, palladium and platinum.

**13.** The magnetooptical recording medium as claimed in Claim 1, 2, 3 or 4 wherein the nickel alloy film is composed of an alloy comprising nickel and at least one element selected from the group consisting of chromium, silicon, copper, molybdenum and iron.

**14.** The magnetooptical recording medium as claimed in Claim 1 or 3 wherein an overcoat layer is formed on the nickel alloy film.

**15.** The magnetooptical recording medium as claimed in Claim 2 or 4 wherein an overcoat layer is formed on the aluminum alloy film.

**16.** The magnetooptical recording medium as claimed in Claim 1, 2, 3 or 4 wherein a top coat layer is formed on the substrate opposite to the side of the protective film.

**17.** The magnetooptical recording medium as claimed in Claim 1 or 2 wherein the substrate has a thickness of 0.5 to 5 mm, the protective film has a thickness of 500 to 2000 Å, the magnetooptical recording film has a thickness of 100 to 600 Å, the aluminum alloy film has a thickness of 100 to 5000 Å, and the nickel alloy film has a thickness of 200 to 5000 Å.

**18.** The magnetooptical recording medium as claimed in Claim 3 or 4, wherein the substrate has a thickness of 0.5 to 5 mm, the protective film formed on the substrate has a thickness of 500 to 2000 Å, the magnetootical recording film has a thickness of 100 to 600 Å, the protective film formed on the magnetooptical recording film has a thickness of 100 to 1000 Å, the aluminum alloy film has a thickness of 100 to 5000 Å, and the nickel alloy film has a thickness of 200 to 5000 Å.

FIG. 1

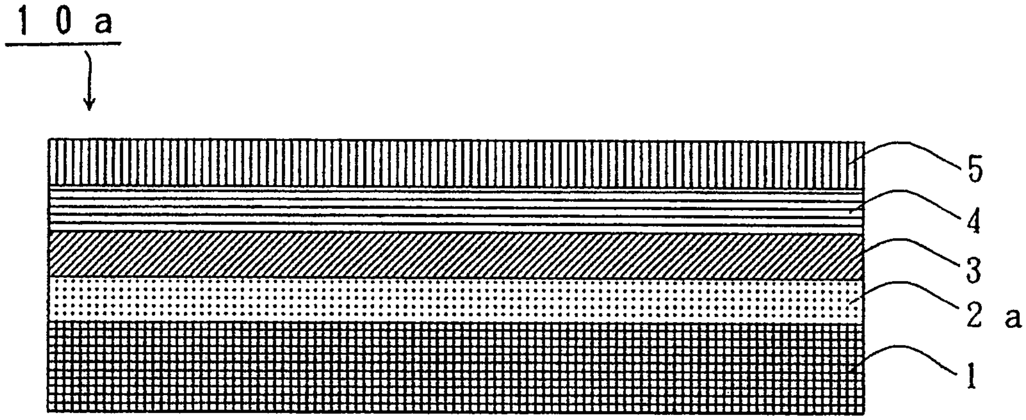


FIG. 2

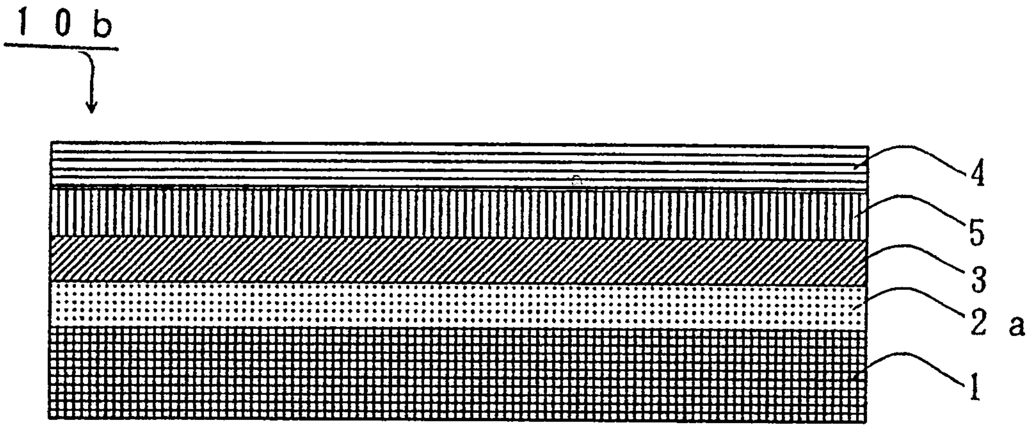

FIG. 3

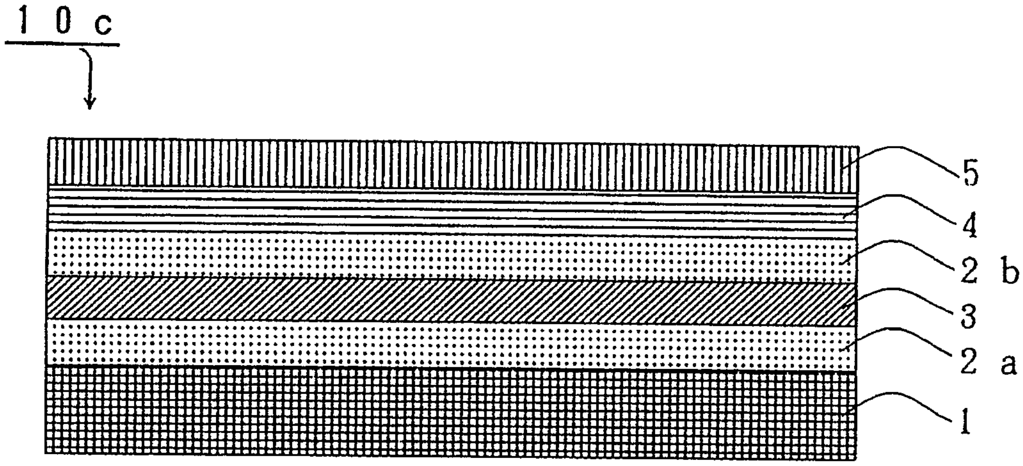


FIG. 4